Europäisches Patentamt

European Patent Office

Office européen des brevets

(19)

(11) **EP 1 061 704 B1**

(12) **FASCICULE DE BREVET EUROPEEN**

(45) Date de publication et mention
de la délivrance du brevet:
**13.04.2005 Bulletin 2005/15**

(51) Int Cl.[7]: **H04L 27/26**, G06T 1/60

(21) Numéro de dépôt: **00401481.7**

(22) Date de dépôt: **26.05.2000**

(54) **Procédé et dispositif de calcul d'une transformation rapide de Fourier pour une demodulation OFDM**

Verfahren und Einrichtung zur schnellen Fouriertransformation zur OFDM-Demodulation

Fast Fourier transform method and apparatus for OFDM demodulation

(84) Etats contractants désignés:
**DE FR GB IT**

(30) Priorité: **14.06.1999 FR 9907495**

(43) Date de publication de la demande:
**20.12.2000 Bulletin 2000/51**

(73) Titulaires:
• **STMicroelectronics S.A.**
**92120 Montrouge (FR)**
• **FRANCE TELECOM**
**75015 Paris (FR)**

(72) Inventeurs:
• **Cambonie, Joel**
**38190 La Combe de Lancey (FR)**
• **Mejean, Philippe**
**38000 Grenoble (FR)**
• **Barthel, Dominique**
**38190 Bernin (FR)**
• **Lienard, Joel**
**38240 Meylan (FR)**

(74) Mandataire: **Dossmann, Gérard**
**Bureau D.A. Casalonga-Josse**
**Paul-Heyse-Strasse 33**
**80336 München (DE)**

(56) Documents cités:
**EP-A- 0 478 128      EP-A- 0 855 657**

• **SHOUSHENG HE ET AL: "Designing pipeline FFT processor for OFDM (de)modulation" 1998 URSI INTERNATIONAL SYMPOSIUM ON SIGNALS, SYSTEMS, AND ELECTRONICS. CONFERENCE PROCEEDINGS (CAT. NO.98EX167), 1998 URSI INTERNATIONAL SYMPOSIUM ON SIGNAL, SYSTEMS, AND ELECTRONICS. CONFERENCE PROCEEDINGS, PISA, ITALY, 29 SEPT.-2 OCT. 1998, pages 257-262, XP002120095 1998, IEEE INC., New York, US ISBN: 0-7803-4900-8**
• **BIDET E ET AL: "A FAST SINGLE-CHIP IMPLEMENTATION OF 8192 COMPLEX POINT FFT" IEEE JOURNAL OF SOLID-STATE CIRCUITS,IEEE INC. NEW YORK,US, vol. 30, no. 3, 1 mars 1995 (1995-03-01), pages 300-305, XP000502815 ISSN: 0018-9200**
• **BI G ET AL: "A pipelined FFT processor for word-sequential data" IEEE TRANSACTIONS ON ACOUSTICS, SPEECH AND SIGNAL PROCESSING, DEC. 1989, IEEE INC.,NEW YORK, US, vol. 37, no. 12, pages 1982-1985, XP002129950 ISSN: 0096-3518**

**Description**

L'invention concerne la transformation d'un flot de groupes respectifs de 2N données réelles d'entrée en un flot de symboles complexes de sortie respectivement formés de N échantillons complexes de sortie, par un traitement du type entrelacé.

L'invention s'applique avantageusement mais non limitativement aux systèmes de transmission d'informations codées selon un codage OFDM (Orthogonal frequency division multiplex : "multiplexage à répartition orthogonale de fréquence").

Un tel système forme par exemple la partie réceptrice d'un dispositif de modulation-démodulation (Modem) numérique à très haute vitesse (Modem VDSL).

Dans un codage OFDM, le signal à transmettre est codé sur N porteuses modulées en phase et en amplitude en fonction du contenu des informations à transmettre. Chaque porteuse a une fréquence prédéterminée et toutes les fréquences des porteuses sont un sous-multiple d'une fréquence d'échantillonnage prédéterminée. Et chaque symbole formé de N porteuses numériques, qui sont N échantillons complexes échantillonnés à la fréquence d'échantillonnage, doit être transformé en un groupe de 2N données réelles échantillonnées au double de la fréquence d'échantillonnage, afin de pouvoir être transmises sur un canal de transmission, en particulier une ligne téléphonique.

La transformation d'un symbole complexe respectivement formé de N échantillons complexes, en un groupe de 2N données réelles, peut être effectuée de plusieurs façons.

Une première solution consiste à effectuer une transformée de Fourier inverse de taille double, c'est-à-dire de taille 2N. Cependant, une telle solution nécessite l'adjonction d'un étage de traitement supplémentaire ainsi que l'adjonction de mémoire supplémentaire.

Une deuxième solution consiste à effectuer une transformée de Fourier inverse de taille simple, c'est-à-dire de taille N, suivie d'un filtrage complexe afin d'éliminer une partie du spectre. Or, une telle mise en oeuvre conduit à une réalisation matérielle relativement compliquée.

Une troisième solution consiste à effectuer toujours une transformée de Fourier inverse de taille N, mais cette fois-ci suivie d'un filtrage réel. Cependant, une telle solution, plus simple à mettre en oeuvre que la solution précédente, est toutefois approximative en ce qui concerne la précision obtenue en raison d'un rapport signal/bruit qui peut s'avérer relativement important conduisant à des dégradations du signal. Et, l'augmentation des performances de cette solution, c'est-à-dire la diminution du rapport signal/bruit, nécessite l'utilisation d'un filtre réel extrêmement important, ce qui implique une mise en oeuvre matérielle coûteuse.

Une autre solution consiste à effectuer la transformation du flot de symboles complexes respectivement formés de N échantillons complexes, en un flot de groupes respectifs de 2N données réelles, par un traitement du type entrelacé dont la formulation théorique est bien connue de l'homme du métier.

On rappelle ici, à toutes fins utiles, les principales caractéristiques d'un traitement du type entrelacé.

Le signal réel x(t) correspondant par exemple à un symbole OFDM, est défini par la formule (I) :

$$x(t) \; = \; \sum_{k=1}^{N-1} M_k \, . \, \cos\left(2\pi f_k t + \varphi_k\right) \qquad\qquad (\text{I})$$

dans laquelle $M_k$ désigne l'amplitude de la porteuse de rang k, $\varphi_k$ désigne sa phase, $f_k$ sa fréquence et N-1 le nombre de porteuses. Lorsque les fréquences des porteuses sont toutes multiples d'une fréquence $f_1$, alors la formule (I) devient la formule (II) en notation complexe :

$$x(t) = \mathrm{Re}\left[\sum_{k=1}^{N-1} C_k \, . \, e^{2j\pi k f_1 t}\right] \, , \qquad\qquad (\text{II})$$

dans laquelle $C_k$ désigne l'échantillon complexe représentatif de la porteuse de rang k. $C_k$ est défini par la formule (III) :

$$C_k = M_k \, . \, e^{j\varphi_k} \qquad\qquad\qquad (\text{III})$$

Avec un échantillonnage du signal à la fréquence $Nf_1$ et en étendant la longueur du symbole à N porteuses (par l'adjonction de la porteuse $C_0$ prise égale à 0), on montre alors que les N données réelles de rangs pairs, correspondant au N échantillons complexes du symbole d'entrée, sont données par la formule (IV) :

$$\{x_{2p}\} = \text{Re}\left(\text{IFFT}_N\left\{(C_k + \bar{C}_{N-k}) + j(C_k - \bar{C}_{N-k})e^{\frac{j\pi}{N}k}\right\}\right) \qquad \text{(IV)}$$

tandis que les données réelles de rangs impairs $x_{2p+1}$ sont données par la formule (V) :

$$\{x_{2p+1}\} = \text{Im}\left(\text{IFFT}_N\left\{(C_k + \bar{C}_{N-k}) + j(C_k - \bar{C}_{N-k})e^{\frac{j\pi}{N}k}\right\}\right) \qquad \text{(V)}$$

Dans ces formules (IV) et (V), $\bar{C}_{N-k}$ représente le nombre complexe conjugué du nombre complexe $C_{N-k}$, $\text{IFFT}_N$ représente l'opérateur "transformée de Fourier inverse de taille N", Im désigne la partie imaginaire d'un nombre complexe et Re désigne la partie réelle d'un nombre complexe.
On voit donc que le traitement du type entrelacé comporte une phase de prétraitement dans laquelle, pour chaque symbole reçu formé de N échantillons complexes $C_k$, on élabore un symbole formé de N échantillons complexes $AA_k$, chaque échantillon complexe $AA_k$ étant défini par la formule (VI) :

$$AA_k = (\bar{C}_k + C_{N-k}) + j(C_k - \bar{C}_{N-k})e^{j\pi k/N} \qquad \text{(VI)}$$

Après ce prétraitement, on effectue une phase de traitement comportant pour chaque symbole formé des échantillons $AA_k$, un calcul de transformée de Fourier inverse de taille N. Le résultat de cette transformée de Fourier inverse est un jeu de N coefficients complexes $A_k$ qui, après réarrangement pour retrouver l'ordre d'entrée, permet d'obtenir aisément les 2N données réelles correspondant au symbole d'entrée puisque les données réelles de rangs pairs et impairs correspondent respectivement aux parties réelles et imaginaires des échantillons complexes $A_k$ successivement obtenus après réarrangement.
Une fois que les 2N données réelles ont été transmises sur la ligne téléphonique, il convient de les récupérer afin d'en effectuer une transformation en un flot de symboles complexes pour, en l'espèce, obtenir les porteuses complexes $C_k$.
Là encore, plusieurs solutions sont envisageables.
Une première solution consiste à effectuer une transformée de Fourier directe de taille double, c'est-à-dire de taille 2N.
Une deuxième solution consiste à effectuer une transformée de Fourier de taille simple, c'est-à-dire une taille N, suivie d'un filtrage complexe.
Une troisième solution consiste à effectuer toujours une transformée de Fourier inverse de taille N, mais cette fois-ci suivie d'un filtrage réel.
Cependant, toutes ces solutions présentent les mêmes inconvénients que ceux qui ont été exposés respectivement ci-avant en ce qui concerne la partie émettrice.
C'est la raison pour laquelle on envisage préférentiellement d'effectuer la transformation du flot de groupes respectifs de 2N données réelles d'entrée en un flot de symboles complexes de sortie formé de N échantillons complexes de sortie, par un traitement du type entrelacé dont la formulation théorique est là encore bien connue de l'homme du métier.
On rappelle ici, à toutes fins utiles, les principales caractéristiques d'un traitement du type entrelacé effectué à la réception des données réelles d'entrée.
Comme explicité dans la formule (VII) ci-après :

$$\{U_k\}_{0 \leq k < N-1} = \text{FFT}_N\{(x_{2p} + jx_{2p+1})_{0 \leq p < N-1}\} \qquad \text{(VII)}$$

dans laquelle l'anotation $FFT_N$ désigne l'opérateur transformée de Fourier direct de taille N, et dans laquelle $U_0$ est égal à 0,

on élabore, dans une phase de traitement initial, des symboles initiaux $A_p$, avec p variant de 0 à n-1, et définis par la formule (VIII) :

$$A_p = x_{2p} + jx_{2p+1} \tag{VIII}$$

Chaque échantillon complexe initial $A_p$ a une partie réelle formée par une donnée d'entrée de rang paire et une partie imaginaire formée par la donnée d'entrée suivante de rang impaire.

Ces N échantillons complexes initiaux sont ordonnés selon un ordre naturel correspondant à l'ordre naturel de réception des données d'entrée $x_p$.

Le calcul de transformée de Fourier directe de taille N permet alors d'obtenir N échantillons complexes auxiliaires $U_k$ qui sont délivrés classiquement dans un ordre dit renversé ("bit reverse" en langue anglaise) par rapport à l'ordre naturel.

Ces échantillons auxiliaires $U_k$ doivent ensuite subir une phase de traitement ultérieur conformément à la formule (IX) ci-après, comportant un réarrangement et un traitement spécifique mettant en oeuvre chaque échantillon auxiliaire $U_k$ et l'échantillon auxiliaire apparié $U_{N-k}$, de façon à délivrer à nouveau dans l'ordre naturel, les N échantillons complexes de sortie $C_k$. Formule (IX) :

$$\{C_k\} = \frac{1}{4}\left[ \mathrm{Re}(U_k) + \mathrm{Re}(U_{N-k}) + j\mathrm{Im}(U_k) - j\mathrm{Im}(U_{N-k}) + e^{-\frac{j\pi}{N}k}\left(\mathrm{Im}(U_k) + \mathrm{Im}(U_{N-k}) - j\mathrm{Re}(U_{N-k}) + j\mathrm{Re}(U_k)\right)\right]$$

Actuellement, une mise en oeuvre connue de ce traitement entrelacé est une mise en oeuvre entièrement logicielle qui s'avère relativement complexe à utiliser dans des appareils industriels comme par exemple des modems. En outre, plus la taille de la transformée de Fourier est importante et plus la vitesse de traitement augmente, plus les contraintes d'implémentation deviennent sévères.

L'un des buts de l'invention est de réduire au maximum les implémentations logicielles et d'utiliser, notamment pour là phase de traitement ultérieur, des opérateurs matériels réalisés sous forme de circuit intégré et/ou de circuits logiques reprogrammables et utilisant des mémoires vives simple accès, qui sont des composants aisément disponibles dans les librairies usuelles de composants, en particulier dans sa forme la plus simple (mémoire simple accès), et qui sont totalement indépendants de la technologie utilisée et parfaitement compatibles avec des fréquences de travail très élevées.

Une solution pour réduire le nombre de mémoires vives pour le calcul d'une transformée de Fourier est d'écrit dans EP-A-0 855 657.

L'invention a encore pour but de minimiser la taille des mémoires utilisées pour la phase de traitement ultérieur et d'optimiser la durée de latence (la durée séparant l'arrivée du premier échantillon d'un symbole et la délivrance du premier échantillon de sortie) de la phase de traitement ultérieur, ce qui est particulièrement utile pour des applications de transmission haute vitesse comme par exemple celles utilisant des modems VDSL travaillant à 55 mbits/seconde.

L'invention propose donc un procédé de transformation d'un flot de groupes respectifs de 2N données réelles d'entrée en un flot de symboles complexes de sortie respectivement formés de N échantillons complexes de sortie. Cette transformation s'effectue par un traitement du type entrelacé, c'est-à-dire un traitement comprenant, pour un groupe de données d'entrées courant, une phase de traitement initial comportant l'élaboration d'un symbole initial courant formé de N échantillons complexes initiaux courants ordonnés selon un ordre naturel correspondant à l'ordre naturel de réception des données d'entrée dudit groupe courant, et un calcul de transformée de Fourier directe de taille N délivrant dans un ordre dit "renversé" par rapport à l'ordre naturel, N échantillons complexes auxiliaires courant formant un symbole auxiliaire courant.

Le traitement du type entrelacé comporte également une phase de traitement ultérieur du symbole auxiliaire courant dans laquelle on élabore à partir des échantillons auxiliaires courants délivrés, les N échantillons complexes de sortie courants, ordonnés selon l'ordre naturel, et formant le symbole de sortie courant.

Selon une caractéristique générale de l'invention, la phase de traitement ultérieur du symbole auxiliaire courant comprend une première étape comportant le stockage séquentiel des N échantillons auxiliaires dans deux mémoires vives adressables séparément et de tailles respectives égales à N/2, en utilisant une première séquence d'adressage correspondant à l'un des ordres naturel et renversé.

La phase de traitement ultérieur du symbole auxiliaire courant comporte ensuite une deuxième étape comportant l'élaboration séquentielle des N échantillons de sortie et leur délivrance séquentielle dans l'ordre naturel, à partir d'une lecture de ces N échantillons auxiliaires stockés et ce, en utilisant une deuxième séquence d'adressage correspondant à l'autre des ordres naturel et renversé.

En d'autres termes, si lors de la première étape, on a adressé les deux mémoires avec une séquence d'adressage correspondant à l'ordre naturel, on adressera les deux mémoires dans la deuxième étape avec une séquence d'adressage correspondant à l'ordre renversé, et inversement.

Par ailleurs, la phase de traitement ultérieur du symbole auxiliaire courant est temporellement imbriquée avec les phases de traitement ultérieur respectives du symbole auxiliaire précédent et du symbole auxiliaire suivant, l'adressage des deux mémoires étant successivement alternativement effectué selon la première et la deuxième séquences d'adressage.

En d'autres termes, l'imbrication temporelle évoquée ci-avant signifie qu'entre la fin de la délivrance du symbole auxiliaire précédent et la fin de la délivrance du symbole auxiliaire courant, on effectue la première étape (c'est-à-dire le stockage) de la phase de traitement ultérieur du symbole auxiliaire courant et la deuxième étape (l'élaboration et la délivrance) de la phase de traitement ultérieur du symbole auxiliaire précédent. De même, entre la fin de la délivrance du symbole auxiliaire courant et la fin de la délivrance du symbole auxiliaire suivant, on effectue la première étape (le stockage) de la phase de traitement ultérieur du symbole auxiliaire suivant et la deuxième étape (l'élaboration et la délivrance) de la phase de traitement ultérieur du symbole auxiliaire courant.

Cette imbrication est cadencée par un signal d'horloge-symbole, dont la fréquence est typiquement de l'ordre de 5 kHz pour N=2048.

Et, l'adressage des deux mémoires est alternativement effectué selon l'ordre naturel ou selon l'ordre renversé au rythme des cycles du signal d'horloge-symbole.

L'invention est remarquable en ce sens que l'imbrication temporelle des phases de traitement ultérieur des différents symboles, en combinaison avec l'adressage alternativement effectué selon l'ordre naturel et l'ordre renversé, et avec l'utilisation de deux mémoires (ou de deux bancs-mémoires) de taille N/2, permet, pour cette phase de traitement ultérieur, d'utiliser des moyens de mémorisation de taille globale égale à N, en particulier deux bancs-mémoires (ou mémoires) simple accès adressables séparément. Ceci n'aurait pas été possible si l'on avait effectué comme c'est habituellement le cas de façon logicielle, d'abord le réarrangement des échantillons auxiliaires puis l'élaboration des échantillons de sortie. En effet, un telle mise en oeuvre combinée à l'utilisation de mémoires simple accès aurait nécessité deux mémoires de taille N, l'une pour le stockage des échantillons auxiliaires du symbole auxiliaire courant et une autre, contenant les échantillons auxiliaires du symbole précédent à partir duquel serait effectuée l'élaboration des échantillons de sortie conformément à la formule (IX) ci-avant.

Selon un mode de mise en oeuvre du procédé, lors de la première étape de la phase de traitement ultérieur du symbole auxiliaire courant, on stocke chacun des deux échantillons auxiliaires appariés dans une mémoire différente. Et, dans la deuxième étape, on élabore simultanément l'échantillon de sortie courant de rang k et l'échantillon de sortie courant apparié de rang N-k, on délivre directement l'échantillon de sortie courant de rang k, tandis que l'on ne délivre pas directement l'échantillon de sortie courant de rang N-k. En effet, on stocke cet échantillon de sortie courant apparié dans l'une des mémoires en attendant de l'extraire de nouveau en vue de sa délivrance ultérieure.

L'invention a également pour objet un dispositif de transformation d'un flot de groupes respectifs de 2N données réelles d'entrée en un flot de symboles complexes de sortie respectivement formés de N échantillons complexes de sortie. Ce dispositif comprend des moyens de traitement aptes à effectuer sur chaque groupe d'entrée un traitement du type entrelacé. Ces moyens de traitement comportent un bloc de traitement initial comportant des moyens d'élaboration aptes à élaborer un symbole initial formé de N échantillons complexés initiaux courants ordonnés selon un ordre naturel correspondant à l'ordre naturel de réception des données d'entrée dudit groupe d'entrée.

Le bloc de traitement initial comporte par ailleurs des moyens de calcul de transformée de Fourier directe de taille N, délivrant dans un ordre dit "renversé" par rapport à l'ordre naturel, N échantillons complexes auxiliaires formant un symbole auxiliaire.

Les moyens de traitement comportent par ailleurs un bloc de traitement ultérieur apte à élaborer à partir des échantillons auxiliaires délivrés, les N échantillons complexes de sortie, ordonnés selon l'ordre naturel, et formant le symbole de sortie correspondant audit groupe d'entrée.

Selon une caractéristique générale de l'invention, le bloc de traitement ultérieur comprend deux mémoires vives adressables séparément et de tailles respectives égales à N/2.

Ce bloc de traitement ultérieur comporte par ailleurs des premiers moyens de traitement aptes à effectuer un premier traitement comportant le stockage séquentiel des N échantillons auxiliaires dans les deux mémoires vives selon une première séquence d'adressage commandable correspondant à l'un des ordres naturel et renversé.

Le bloc du traitement ultérieur comporte également des deuxièmes moyens de traitement aptes à effectuer un deuxième traitement comportant :

- la lecture, selon une deuxième séquence d'adressage commandable correspondant à l'autre des ordres naturel et renversé, des N échantillons auxiliaires stockés,
- l'élaboration séquentielle des N échantillons de sortie, et
- leur délivrance séquentielle dans l'ordre naturel.

Le bloc de traitement ultérieur comporte également des moyens de contrôle aptes

- à activer les premiers moyens de traitement puis les deuxièmes moyens de traitement de façon à effectuer successivement les premier et deuxième traitements relatifs à chaque symbole auxiliaire courant,
- à activer parallèlement les premiers moyens de traitement et les deuxièmes moyens de traitement de façon à effectuer respectivement les premier et deuxième traitements relatifs à deux symboles auxiliaires successifs, et
- à alternativement activer la première et la deuxième séquences d'adressage à chaque nouvelle activation des premiers moyens de traitement.

D'autres avantages et caractéristiques de l'invention apparaîtront à l'examen de la description détaillée de modes de mise en oeuvre et de réalisation, nullement limitatifs, et des dessins annexés, sur lesquels :

- la figure 1 illustre de façon schématique deux modems permettant une mise en oeuvre de l'invention;
- la figure 2 illustre plus en détail mais toujours de façon schématique, l'architecture interne de la partie émettrice d'un modem;
- la figure 3 illustre plus en détail mais toujours de façon schématique, la partie réceptrice d'un modem comportant un mode de réalisation d'un dispositif selon l'invention;
- la figure 4 illustre un opérateur de transformée de Fourier directe en forme de papillon à radix 4;
- la figure 5 est un synoptique schématique d'une implémentation de transformée de Fourier directe à architecture pipelinée, à deux étages de traitement, incorporée dans un modem selon l'invention;
- la figure 6 illustre des traitements de type papillon effectués dans ces étages;
- la figure 7 représente une table illustrant la conversion d'une adresse codée selon un ordre naturel ou selon un ordre dit "renversé" et plus généralement la correspondance entre l'ordre naturel et l'ordre renversé;
- la figure 8 illustre très schématiquement et plus en détail l'architecture interne d'un bloc de traitement ultérieur incorporé dans un dispositif selon l'invention;
- la figure 9 représente schématiquement un chronogramme d'un premier mode de mise en oeuvre du procédé selon l'invention;
- les figures 10a à 10e illustrent, dans un cas particulier d'un symbole comportant seize échantillons, les différentes phases d'écriture et de lecture des mémoires du dispositif selon l'invention;
- la figure 11 illustre schématiquement et plus en détail une partie du bloc de traitement ultérieur; et
- la figure 12 représente un chronogramme temporel schématique illustrant une autre mise en oeuvre du procédé selon l'invention.

Bien que l'invention n'y soit pas limitée, on va maintenant décrire des modes de réalisation et de mise en oeuvre de l'invention, plus particulièrement applicables aux modems numériques à très haute vitesse.

L'invention concerne, dans le cadre de cette application, plus particulièrement la partie réceptrice de ces modems au sein desquels doit s'effectuer la transformation des données réelles reçues, en symboles complexes de façon à retrouver les caractéristiques des porteuses transmises, modulées en phase et en amplitude.

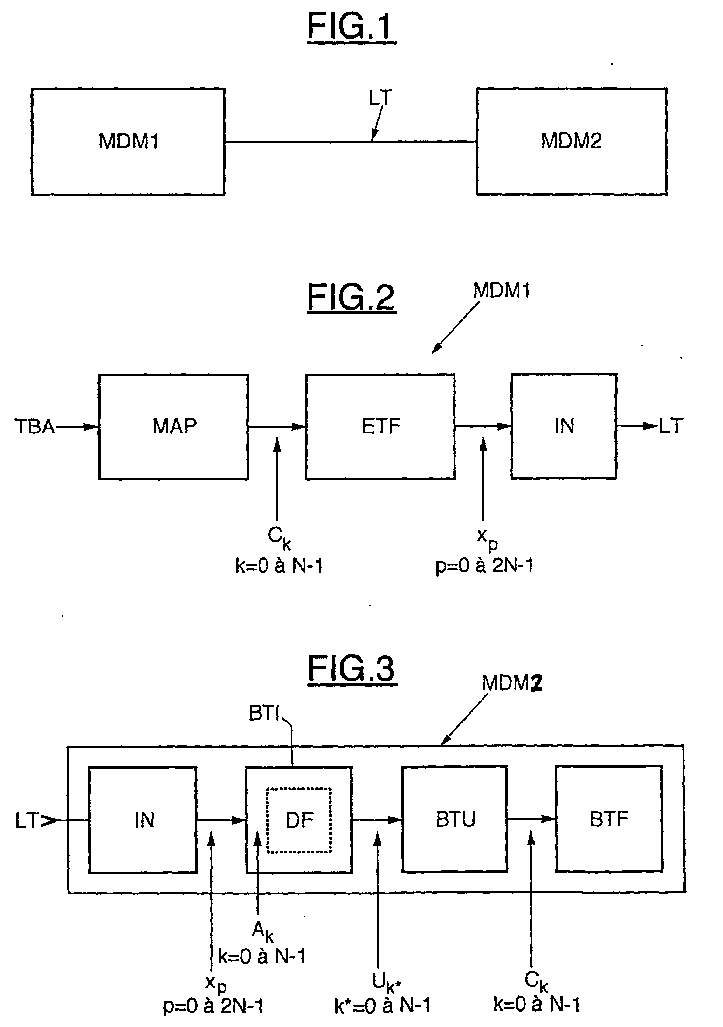

Sur la figure 1, les références MDM1 et MDM2 désignent respectivement deux modems dialoguant par l'intermédiaire d'une ligne téléphonique LT.

Chaque modem comporte une partie émettrice et une partie réceptrice. On décrit tout d'abord la partie émettrice d'un modem, et plus particulièrement ci-après la partie émettrice du modem MDM1.

Comme illustré plus particulièrement sur la figure 2, on voit que cette partie émettrice du modem MDM1 comporte des moyens d'allocation de porteuse MAP, de structure classique et connue en soi, recevant un train de bits asynchrone TBA et délivrant un rythme régulier de porteuses à une fréquence prédéterminée, par exemple 11 MHz. Chaque porteuse complexe $C_k$ est associée à une fréquence $f_k$ sous-multiple de la fréquence d'échantillonnage. Typiquement, l'espace fréquentiel interporteuse est de l'ordre de quelques kHz. N (par exemple 2048) échantillons complexes $C_k$, tels que définis par la formule (III) ci-avant, forment un symbole complexe.

En pratique, les différents symboles sont mutuellement espacés d'un intervalle de garde constitué d'un nombre plus ou moins grand d'échantillons, qui peuvent être la recopie de certains échantillons du symbole suivant l'intervalle de garde. L'émission des différents symboles du flot de symboles émis par les moyens d'allocation de porteuse MAP sont cadencées par un signal d'horloge-symbole dont la fréquence est typiquement de l'ordre de 5 kHz pour N=2048.

Chaque symbole complexe, formé des N échantillons complexes $C_k$ est ensuite transformé dans des moyens de transformation ETF en un groupe de 2N données réelles de sortie $x_p$, avec p variant de 0 à 2N-1. Les données de sortie $x_p$ sont ensuite transmises à une interface IN, de structure classique connue en soi, avant transmission sur la ligne téléphonique LT.

Dans le cadre de la présente invention, la façon dont est effectuée la transformation des échantillons $C_k$ en les données de sortie $x_p$ est sans importance. Cette transformation comporte bien entendu une transformée de Fourier inverse, mais qui peut être effectuée de différentes façons (transformée de Fourier inverse de taille 2N, ou transformée de Fourier inverse de taille N suivie d'un filtrage complexe ou réel, ou encore traitement du type entrelacé).

On s'intéresse maintenant, dans le cadre de la présente invention, à la partie réceptrice d'un modem, et plus particulièrement ci-après à la partie réceptrice du modem MDM2.

Comme illustré plus particulièrement sur la figure 3, on voit que cette partie réceptice du modem MDM2 comporte également une interface IN, de structure classique et connue en soi, connectée sur la ligne de transmission et permettant de délivrer le flot de groupes de données d'entrée $x_p$ à un bloc de traitement initial BTI. Ce bloc de traitement initial BTI comporte tout d'abord des moyens d'élaboration (non représentés ici à des fins de simplification) aptes à élaborer pour chaque groupe de données $x_p$, avec p variant de 0 à 2N-1, un symbole initial A formé de N échantillons complexes initiaux $A_k$ avec k variant de 0 à N-1.

Plus précisément, dans un traitement entrelacé, chaque symbole complexe initial $A_k$ présente, conformément à la formule (VIII) ci-avant une partie réelle égale à une donnée réelle de rang paire $x_{2p}$, et une partie imaginaire égale à la donnée réelle de rang impaire consécutive $x_{2p+1}$.

Outre ces moyens d'élaboration, le bloc de traitement initial BTI comporte des moyens de calcul DF aptes à effectuer une transformée de Fourier directe de taille N sur chaque symbole initial formé de N échantillons complexes initiaux $A_k$.

Les moyens de calcul DF délivrent alors, pour chaque symbole initial $A_k$ un symbole auxiliaire $U_{k*}$, k* variant de 0 à N-1. Cependant, l'homme du métier sait que les échantillons complexes auxiliaires $U_{k*}$ sont délivrés dans un ordre dit "renversé" (bit reverse) par rapport à l'ordre naturel d'entrée des échantillons initiaux $A_k$. C'est la raison pour laquelle on désigne par k* le rang de l'échantillon U correspondant à cet ordre renversé. On reviendra plus en détail ci-après sur la signification de cet ordre renversé.

Là encore, la façon dont est effectuée la transformée de Fourier directe de taille N, et la structure des moyens de calcul DF, est sans importance dans le cadre de la présente invention. Il existe en effet de nombreuses implémentations de transformée de Fourier directe qui peuvent être utilisées d'une façon générale dans le cadre de la présente invention.

Parmi les nombreuses implémentations de transformées de Fourier directes, dédiées ou programmées sur des microprocesseurs de traitement du signal, qui ont été exposées dans la littérature, la plupart de ces implémentations utilisent une variante de l'algorithme de Cooley-Tukey, bien connu de l'homme du métier, qui permet de réduire le nombre d'opérations arithmétiques nécessaires au calcul de la transformée de Fourier. Cet algorithme permet ainsi notamment de réduire le calcul d'une transformée de Fourier rapide de taille initiale rP, où r représente le "radix" selon une dénomination habituellement utilisée par l'homme du métier, en celui de r transformées de Fourier de taille $r^{p-1}$ et d'additions et de multiplications complexes supplémentaires. En réitérant cette réduction, on arrive au calcul de transformées de Fourier de taille r, aisément réalisables, notamment si r est choisi égal à 2 ou 4.

L'algorithme de Cooley-Tukey utilise un graphe de calcul faisant apparaître une structure en forme générale de papillon, bien connue de l'homme du métier, et communément désignée en langue anglaise sous le terme "butterfly".

Plusieurs architectures matérielles sont alors possibles pour implémenter une structure de calcul en forme de papillon.

Une première solution consiste à réaliser un opérateur matériel capable d'effectuer un calcul de type papillon, par papillon du graphe. Cependant, une telle solution n'est envisageable que pour l'implémentation de transformées de Fourier de petite taille.

Une deuxième solution consiste à ne réaliser qu'un seul opérateur matériel du type papillon, et destiné à effectuer successivement les calculs correspondant à tous les papillons de tous les étages du graphe. Une telle solution nécessite d'une part un opérateur matériel très rapide, et d'autre part une mémoire d'entrée distincte de la mémoire servant à écrire les résultats intermédiaires de calcul et ce, afin d'éviter les conflits d'accès lorsqu'un bloc de données entre dans l'opérateur alors que le bloc précédent est encore en cours de traitement.

Une solution intermédiaire consiste à réaliser un opérateur matériel du type papillon par étage du graphe, ainsi qu'un élément de mémorisation, tel que par exemple des lignes à retard ou des registres à décalage, dont la fonction est de présenter en entrée de l'opérateur les données dans le bon ordre compte tenu des papillons du graphe de l'étage considéré.

De telles architectures sont dites "série" ou "pipelinées" selon une dénomination usuelle employée par l'homme du métier.

Plus précisément, un dispositif électronique de calcul d'une transformée de Fourier dite "à architecture pipelinée" comprend une pluralité d'étages de traitement successifs connectés en série entre l'entrée et la sortie du dispositif par des chemins de données internes. Ces étages comportent respectivement d'une part des moyens de traitement élémentaires aptes à effectuer des traitements de transformée de Fourier de tailles élémentaires plus faibles que la taille initiale, sur des blocs de données de tailles successivement réduites d'un étage au suivant et, d'autre part, des moyens de mémorisation élémentaires.

Par "taille initiale" de la transformée de Fourier on entend ici et dans la suite du texte la taille des blocs (symboles) reçus en entrée du dispositif par le premier étage.

Les tailles élémentaires des transformées de Fourier effectuées par les différents étages peuvent être identiques et égales au radix de la transformée de Fourier. On parle alors de transformée de Fourier à radix "uniforme." Elles peuvent être différentes d'un étage à l'autre dans le cas de transformées de Fourier à radix "mixte".

Des exemples de telles architectures pipelinées sont décrits dans l'article de BI et JONES intitulé "a Pipelined FFT Processor for Word-Sequential Data", IEEE Transactions on Acoustic Speech and Signal Processing, vol. 37, n°12, décembre 1989, pages 1982-1985, et dans l'article de BIDET et autres, intitulé "A Fast Single-Chip Implementation of 8192 Complex Point FFT", IEEE Journal of Solid-State Circuits, vol. 30, n°3, mars 1995, pages 300-305.

Les moyens de calcul DF seront donc de préférence des moyens à architecture pipelinée dont la réalisation matérielle peut être par exemple aisément effectuée sous forme de circuit intégré et/ou de circuits logiques reprogrammables en utilisant des outils de synthèse automatiques.

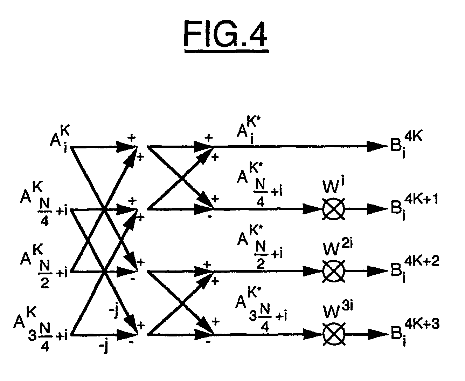

On fait maintenant plus particulièrement référence à la figure 4, qui illustre un opérateur de transformée de Fourier directe en forme de papillon à radix 4.

D'une façon générale, si pour un étage de traitement à radix 4, la taille du bloc d'échantillons (ou symbole) reçu en entrée est égale à N, ce bloc d'échantillons peut être décomposé en quatre segments de N/4 échantillons chacun, temporellement reçus consécutivement. Le premier segment est formé des échantillons $A_i^K$, le deuxième segment est formé des échantillons $A_{N/4+i}^K$, le troisième segment est formé des échantillons $A_{N/2+i}^K$ et le quatrième segment est formé des échantillons $A_{3N/4+i}^K$, i variant de 0 à N/4 - 1, et représentant le nombre de traitements du type papillon effectué dans l'étage sur chaque bloc d'échantillons reçu. K représente le $K^{ème}$ bloc reçu par l'étage. i est égal à k modulo 4 où k représente le rang de la donnée dans le bloc (ou symbole).

Par ailleurs, l'homme du métier sait que si s désigne le rang de l'étage considéré, N est égal à $N0/4^s$ où N0 désigne la taille initiale de la transformée de Fourier inverse, c'est-à-dire la taille de chaque symbole reçu par l'étage d'entrée.

En outre, si l'étage considéré est le premier, N est égal à N0 et le Kème bloc correspond au Kème symbole reçu.

Par contre, si l'étage considéré n'est pas le premier (rang s différent de 0), chaque symbole en entrée du dispositif se décompose récursivement aus sein de chaque étage en $4^s$ blocs K (K variant de 0 à $4^s$-1).

Le résultat de ces traitements de type papillon sont des échantillons intermédiaires également ordonnées au sein de quatre segments intermédiaires contenant chacun N/4 échantillons intermédiaires.

Plus précisément, le premier segment intermédiaire contient les échantillons intermédiaires $A_i^{K*}$, le deuxième segment intermédiaire contient les échantillons intermédiaires $A_{N/4+i}^{K*}$, le troisième segment intermédiaire contient les échantillons $A_{N/2+i}^{K*}$ et le quatrième segment intermédiaire contient les échantillons $A_{3N/4+i}^{K*}$.

Ces échantillons intermédiaires sont obtenus selon les formules (X) à (XIII) suivantes :

$$A_i^{K*} = A_i^K + A_{N/4+i}^K + A_{N/2+i}^K + A_{3N/4+i}^K \tag{X}$$

$$A_{N/4+i}^{K*} = A_i^K - A_{N/4+i}^K + A_{N/2+i}^K - A_{3N/4+i}^K \tag{XI}$$

$$A_{N/2+i}^{K*} = A_i^K - j\, A_{N/4+i}^K - A_{N/2+i}^K + j\, A_{3N/4+i}^K \tag{XII}$$

$$A_{3N/4+i}^{K*} = A_i^K + j\, A_{N/4+i}^K - A_{N/2+i}^K - j\, A_{3N/4+i}^K \tag{XIII}.$$

Dans ces formules, j désigne le nombre complexe dont le carré est égal à -1, et i varie de 0 à N/4-1.

Ces échantillons intermédiaires sont ensuite multipliées par des coefficients prédéterminés $W^0$ (c'est-à-dire 1), $W^i$, $W^{2i}$ et $W^{3i}$ selon les segments considérés. Ces coefficients sont des coefficients complexes classiques bien connus de l'homme du métier, donnés par la formule :

$$W^{pi} = e^{-2j\pi pi/N}$$

où p varie de 0 à 3 et i de 0 à N/4-1.

Après multiplication par ces coefficients W, on obtient, en sortie de l'étage de traitement, quatre blocs $BB^{4K}$, $BB^{4K+1}$, $BB^{4K+2}$, $BB^{4K+3}$ contenant respectivement N/4 échantillons de sortie, $B_i^{4K}$, $B_i^{4K+1}$, $B_i^{4K+2}$ et $B_i^{4K+3}$, avec i variant de 0 à N/4-1.

Tous les blocs BB seront alors traités consécutivement par les moyens de traitement élémentaires de l'étage suivant, chacun de ces blocs étant considéré comme un symbole d'entrée pour cet étage suivant.

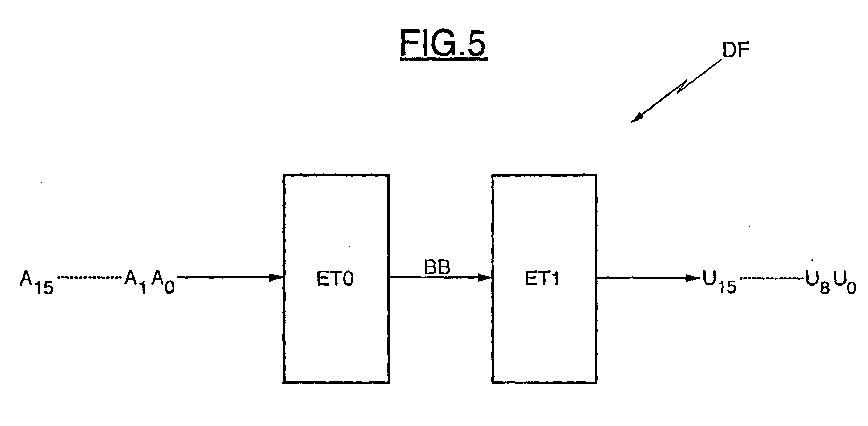

Sur la figure 5, les moyens DF forment ici une architecture pipelinée comportant deux étages de traitement à radix 4, référencés ET0 et ET1. Ces deux étages de traitement effectuent des traitements élémentaires de transformée de Fourier conformément à l'opérateur illustré sur la figure 4.

Sur cette figure 5, on a supposé, à des fins de simplification, que la taille du symbole initial est égale à 16, la taille de la transformée de Fourier étant de ce fait aussi égale à 16.

L'étage d'entrée ET0 reçoit des flots de symboles initiaux, comportant respectivement seize échantillons initiaux $A_0$-$A_{15}$. La sortie de l'étage ET0 délivre des blocs successifs BB de quatre échantillons qui sont traitées dans l'étage ET 1. Cet étage ET1 délivre le symbole de sortie $U_{15}$ ...... $U_8U_0$ correspondant à la transformation de Fourier directe du symbole initial.

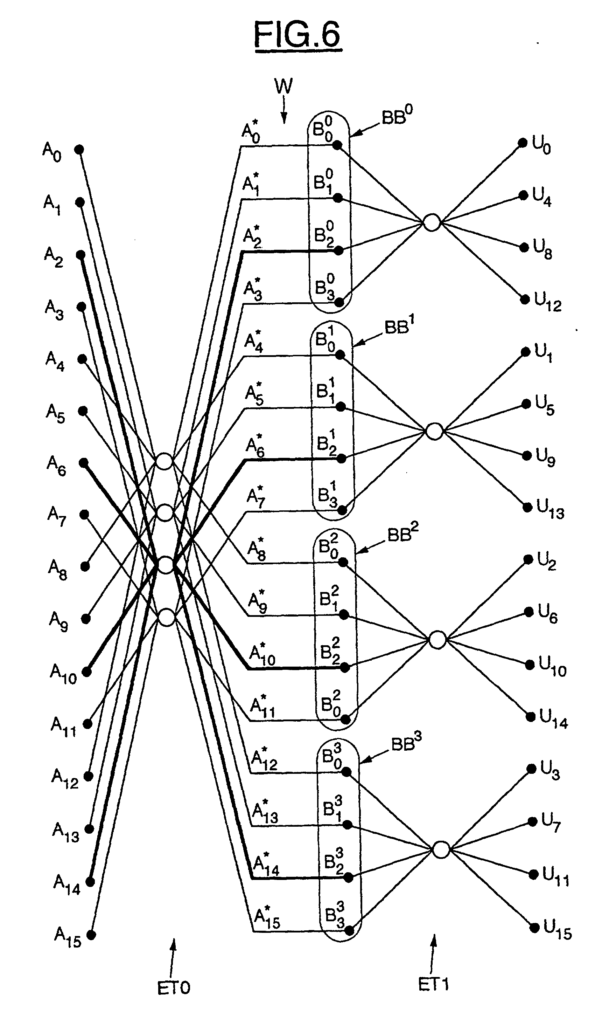

La figure 6 illustre le cas particulier des seize échantillons (N=16) de chaque bloc reçu par l'étage ET0.

L'étage de traitement à radix 4 effectue alors N/4 traitements du type papillon conformes au graphe de la figure 4, sur N/4 groupes distincts de quatre données formés respectivement par un échantillon du premier segment et les échantillons homologues des trois autres segments.

Dans l'exemple particulier de la figure 6, l'étage ET0 effectue un premier traitement de type papillon sur le groupe formé des échantillons $A_0$, $A_4$, $A_8$ et $A_{12}$, un deuxième traitement du type papillon sur un deuxième groupe formé des échantillons $A_1$, $A_5$, $A_9$ et $A_{13}$ et ainsi de suite jusqu'à un quatrième traitement de type papillon sur le quatrième groupe formé des échantillons $A_3$, $A_7$, $A_{11}$ et $A_{15}$.

Les moyens de traitement élémentaires de l'étape ET1 vont successivement effectuer un traitement de type papillon conforme au graphe de la figure 4 sur les quatre échantillons de chaque bloc d'entrée BB, de façon à obtenir des données intermédiaires B*, puis des échantillons de sortie qui sont en fait, dans le cas présent, les échantillons auxiliaires $U_{k^*}$, c'est-à-dire le résultat de la transformée de Fourier directe.

Comme illustré plus particulièrement sur la figure 5, on voit que les échantillons auxiliaires $U_{k^*}$ sortent dans un ordre différent de l'ordre d'entrée des échantillons $A_k$. En fait, ils sortent dans un ordre dit "renversé" ou "bit renversé" ("bit reverse") selon une dénomination bien connue de l'homme du métier. Plus précisément, si l'on se réfère au graphe de la figure 4, l'ordre dit "bit renversé" consiste à délivrer successivement à la sortie de chaque étage de traitement du système à architecture pipelinée, les échantillons $B_i^{4K}$, $B_i^{4K+2}$, $B_i^{4K+1}$ et $B_i^{4K+3}$ (les blocs $BB^{4K}$, $BB^{4K+2}$, $BB^{4K+1}$, $BB^{4K+3}$).

L'homme du métier aura noté que la figure 6 est conforme au graphe de la figure 4 qui n'illustre pas l'ordre "bit renversé".

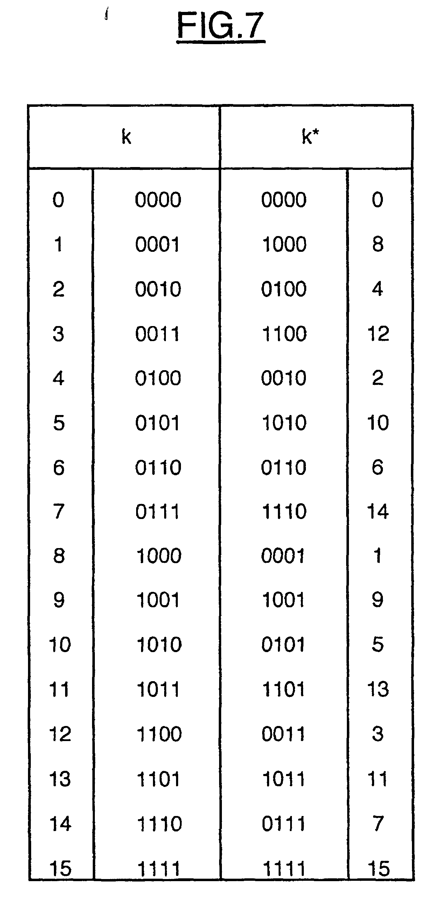

A titre indicatif, si l'on se réfère à la figure 7 qui illustre cet ordre naturel et cet ordre dit "renversé" dans le cas particulier de seize échantillons (k variant de 0 à 15), on voit que si les échantillons initiaux $A_k$ sont successivement reçus dans l'ordre 0, 1, 2, 3, 4, 5, 6, 7, 8, 9, 10, 11, 12, 13, 14, 15, les échantillons auxiliaires $U_k$ sont successivement délivrés dans l'ordre k* égal à 0, 8, 4, 12, 2, 10, 6, 14, 1, 9, 5, 13, 3, 11, 7, 15.

A titre indicatif, on a également indiqué dans le tableau de la figure 7, le codage des valeurs décimales des valeurs k et k* sur quatre bits de façon à illustrer plus clairement cette notion de codage dit "bit renversé" qui consiste ici à effectuer une symétrie des deux bits extrêmes et une symétrie des deux bits du milieu.

Les N échantillons complexes auxiliaires $U_{k^*}$, délivrés dans l'ordre renversé k*, vont alors subir un traitement ultérieur dans un bloc de traitement ultérieur BTU (figure 3), conforme à la formule (IX) ci-avant, de façon à délivrer selon l'odre naturel les échantillons complexes de sortie $C_k$.

Le bloc BTU est suivi d'un bloc de traitement final BTF, de structure connue en soi, et permettant d'obtenir le train de bits TBA.

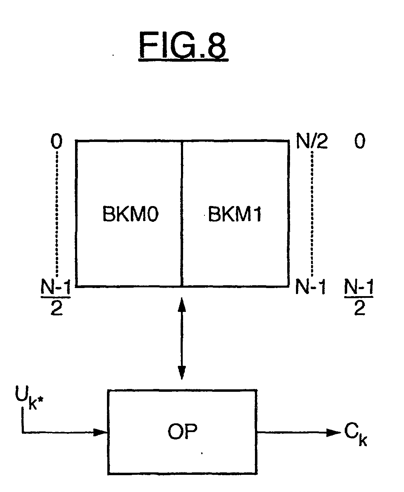

Comme illustré très schématiquement sur la figure 8, le bloc de traitement ultérieur BTU comporte une partie opérative OP, recevant les différents échantillons auxiliaires $U_{k^*}$, dans l'ordre renversé, et coopérant avec deux mémoires vives BKM0 et BKM1, ayant chacune une taille égale à N/2, de façon à élaborer et délivrer dans l'ordre naturel les échantillons complexes de sortie $C_k$.

Chaque mémoire BKM0, BKM1 peut donc stocker N/2 échantillons complexes.

Ces deux mémoires vives sont indépendantes et adressables séparément.

Dans un mode de réalisation, on peut envisager que l'une des mémoires BKM0 soit associée aux adresses 0 à (N-1)/2, tandis que la deuxième mémoire BKM1 est associée aux adresses N/2 à N-1.

Ceci étant, en pratique, on peut considérer les mémoires BKM0 et BKM1 comme étant deux bancs mémoires indépendants et adressables séparément. Chaque banc mémoire est indexé. Plus précisément, le banc mémoire BKM0 est affecté par exemple de l'index 0, tandis que le banc mémoire BKM1 est affecté de l'index 1.

Dans ce cas, chacun des bancs mémoires est associé aux mêmes adresses 0 à (N-1)/2, mais se différenciera par son index. Il convient de remarquer ici que les adresses 0 à (N-1)/2 sont équivalentes aux adresses N/2 à N-1 modulo N/2.

On reviendra plus en détail ci-après sur l'adressage de ces deux bancs mémoires.

On va maintenant décrire plus en détail, en se référant plus particulièrement aux figues 9 et 10, le fonctionnement de cette partie opérative OP.

Les données réelles d'entrée $x_p$ sont successivement reçues par le modem MDM2, et en particulier par le bloc de traitement initial BTI, un par un, à une fréquence $F_c$, par exemple égale à 22 MHz.

Les échantillons auxiliaires $U_{k*}$ contenus dans chacun des symboles auxiliaires délivrés par le bloc BTI, sont délivrés au rythme d'un signal d'horloge de base SMCK dont la fréquence est égale à la moitié de la fréquence $F_c$, soit en l'espèce 11 MHz.

Par ailleurs, la délivrance de chaque symbole auxiliaire U est cadencée par un signal d'horloge symbole SCK dont la fréquence est de l'ordre de 5 KHz lorsque le nombre d'échantillons N est égal à 2048.

Par ailleurs, de façon classique, les différents symboles auxiliaires $U^K$ sont mutuellement séparés par un intervalle de garde IG.

Les moyens formant la partie opérative OP sont quant à eux cadencés par un signal d'horloge de travail MCK dont la fréquence est un multiple de la fréquence du signal de base SMCK. Plus précisément, cette fréquence est deux fois plus importante que la fréquence du signal de base SMCK, soit quatre fois plus importante selon que la partie opérative OP reçoit au cours de chaque cycle du signal de base SMCK, soit la partie réelle et la partie imaginaire de chaque échantillon auxiliaire, soit uniquement la partie réelle ou la partie imaginaire. La fréquence du signal MCK dépend aussi de la bande passante des bancs mémoires (ou mémoires) BKM0 et BKM1, c'est-à-dire de leur capacité à stocker pour chaque échantillon complexe, soit la partie réelle et la partie imaginaire, soit uniquement la partie réelle ou la partie imaginaire. On suppose ici, à des fins de simplification, que l'on reçoit au cours de chaque cycle du signal SMCK la partie réelle et la partie imaginaire d'un échantillon complexe auxiliaire $U_{k*}$ et que les bancs mémoires BKM0 et BKM1 peuvent stocker intégralement cet échantillon. Dans ce cas, la fréquence du signal d'horloge de travail est de 22 MHz. Et, chaque banc mémoire BKM0, BKM1, qui sont dans le cas présent et de préférence des bancs mémoires simple accès (c'est-à-dire autorisant soit un accès en écriture, soit un accès en lecture à chaque cycle du signal d'horloge de travail MCK), pourra être adressé au moins une fois en lecture et une fois en écriture au cours de chaque cycle du signal SMCK, au rythme du signal MCK.

Bien entendu, si les bancs mémoires BKM0 et BKM 1 ne stockent pour chaque échantillon complexe que sa partie réelle ou sa partie imaginaire, la fréquence du signal d'horloge de travail MCK est alors de 44 MHz et chaque banc mémoire pourrait alors être adressé deux fois en lecture et deux fois en écriture au cours de chaque cycle du signal SMCK, au rythme du signal MCK.

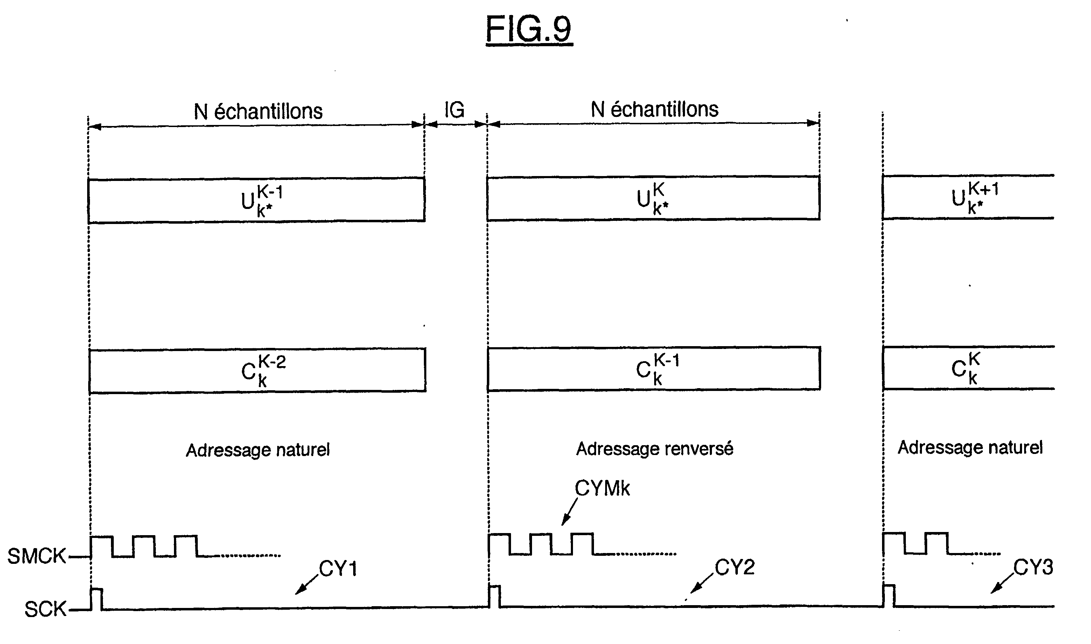

Comme illustré sur la partie gauche de la figure 9, au cours d'un cycle CY1 du signal SCK, les N échantillons $U_k^{*K-1}$, du symbole auxiliaire de rang K-1, sont délivrés successivement dans l'ordre renversé k* par le bloc de traitement initial BTI.

Ceci étant, bien que les échantillons soient délivrés dans l'ordre renversé, ils sont, au cours de ce cycle CY1 du signal SCK, stockés dans les deux bancs mémoires dans l'ordre naturel, c'est-à-dire selon une première séquence d'adressage conforme à cet ordre naturel. Plus précisément, l'échantillon $U_{k*}$ est stocké à l'adresse k. Lorsqu'on utilise deux bancs mémoires indexés, l'adresse k signifie en fait l'adresse k modulo N/2 dans le banc mémoire d'index E(2k/N). E désigne ici l'opérateur partie entière.

Ainsi, au cours de cette première étape de la phase de traitement ultérieur du symbole auxiliaire de rang K-1, on stocke chacun des deux échantillons auxiliaires appariés $U_{k*}$ et $U_{N-k*}$ dans une mémoire (ou banc mémoire) différente. On rappelle ici que deux échantillons sont dits appariés lorsque la somme de leurs rangs respectifs est égale à N.

Une fois que les deux bancs mémoires ont été écrits avec les échantillons auxiliaires du symbole K-1, la deuxième étape de la phase de traitement ultérieur de ce symbole de rang K-1 débute au cycle suivant CY2 du signal d'horloge SCK.

Cette deuxième phase va consister à simultanément élaborer l'échantillon de sortie de rang k, $C_k^{K-1}$, et l'échantillon de sortie apparié de rang N-k. On va alors délivrer directement l'échantillon de sortie de rang k, tandis que l'on va stocker l'échantillon de sortie apparié dans l'une des mémoires en attendant de l'extraire de nouveau en vue de sa délivrance ultérieure.

Par ailleurs, au cours de cette deuxième étape, l'adressage des bancs mémoires s'effectue selon une deuxième séquence d'adressage correspondant à l'ordre renversé.

Plus précisément, au cours de chaque cycle CYMk du signal d'horloge SMCK, on lie l'échantillon $U_k^{K-1}$ et

l'échantillon $U_{N-k}^{K-1}$ aux adresses respectives k* et (N-k)*.

Toujours au cours de ce cycle CYMk du signal SMCK, on élabore simultanément les échantillons $C_k^{K-1}$ et $C_{N-k}^{K-1}$ conformément à la formule (IX) ci-avant. On délivre alors directement, c'est-à-dire sans le stocker au préalable dans l'une des mémoires, l'échantillon $C_k^{K-1}$, tandis que l'on réécrit l'échantillon $C_{N-k}$ dans l'une des mémoires à l'adresse (N-k)*, c'est-à-dire dans le banc mémoire d'index E(2(N-k)*/N) à l'adresse (N-k)* modulo N/2.

Il convient de noter ici que les adresses correspondant aux échantillons $C_k^{K-1}$ sont les adresses k*. Et, ces adresses sont en fait disponibles puisque ces échantillons sont directement délivrés par la partie opérative en sortie. Ainsi, au bout de N/2 cycles du signal SMCK, tous les échantillons de sortie $C_k^{K-1}$, avec k variant de 0 à N-1, ont été élaborés selon la formule (IX).

Au cours des N/2 cycles suivants du signal SMCK, la deuxième étape de ce traitement ultérieur continue avec la lecture aux adresses (N-k)* (k variant de N/2 à N-1), des échantillons $C_{N-k}^{K-1}$, et leur délivrance dans l'ordre naturel.

Ainsi, au bout de ces N/2 cycles suivants, toutes les adresses des deux bancs mémoires ont été lues et le symbole de sortie $C^{K-1}$ correspondant au symbole auxiliaire $U^{K-1}$ a été élaboré par la partie opérative et délivré échantillon par échantillon dans l'ordre naturel.

Ceci étant, au cours de ce cycle suivant CY2 du signal SCK, les échantillons auxiliaires $U_{k*}^K$ du symbole auxiliaire $U^K$ de rang K sont également délivrés, au rythme du signal d'horloge SMCK, par le bloc de traitement initial BTI.

Et, au cours des N/2 premiers cycles du signal d'horloge SMCK, les échantillons $U_{k*}^K$ sont stockés dans l'une des deux mémoires à l'adresse k*. Plus précisément, ces échantillons sont stockés dans le banc mémoire d'index 2k*/N à l'adresse k* modulo N/2. Ceci est possible puisque, comme on l'a expliqué ci-avant, les échantillons $C_k$ du symbole de rang K-1 sont directement délivrés en sortie et ne sont pas restockés dans l'une ou l'autre des mémoires.

Ensuite, au cours des N/2 cycles suivants du signal SMCK, le stockage des échantillons auxiliaires du symbole de rang K se poursuit dans la mémoire correspondante au fur et à mesure que les échantillons $C_{N-k}$ du symbole de rang K-1 sont extraits de la mémoire correspondante pour être délivrés dans l'ordre naturel.

Bien entendu, lorsqu'au cours du cycle précédent CY1, le symbole auxiliaire de rang K-1 était stocké dans les deux bancs mémoires, et les échantillons de sortie du symbole de rang K-2 étaient élaborés de la façon qui vient d'être décrite. Cette élaboration s'effectuait par des accès de bancs mémoires selon un adressage naturel.

Et, l'adressage des bancs mémoires s'effectuera de nouveau selon la séquence d'adressage correspondant à l'ordre naturel pour le stockage des échantillons auxiliaires de rang K+1 et l'élaboration des échantillons de sortie du symbole de rang K (partie droite de la figure 9; cycle CY3 du signal SCK).

L'homme du métier remarque donc que la phase de traitement ultérieur du symbole auxiliaire de rang K est temporellement imbriquée avec les phases de traitement ultérieur respectives du symbole auxiliaire de rang K-1 et du symbole auxiliaire du rang K+1. Par ailleurs, l'adressage des deux mémoires est successivement et alternativement effectué selon la séquence d'adressage correspondant à l'ordre naturel et à l'ordre renversé.

Plus précisément, dans le mode de mise en oeuvre illustré sur la figure 9, au cours de chaque cycle de signal d'horloge symbole SCK, on effectue la première étape (stockage) de la phase de traitement ultérieur du symbole auxiliaire courant et la deuxième étape (élaboration et délivrance) de la phase de traitement ultérieur du symbole auxiliaire précédent. Et, au cours du cycle d'horloge symbole suivant, on effectue la première étape (stockage) de la phase de traitement ultérieur du symbole auxiliaire suivant et la deuxième étape (élaboration et délivrance) de la phase de traitement ultérieur du symbole auxiliaire courant.

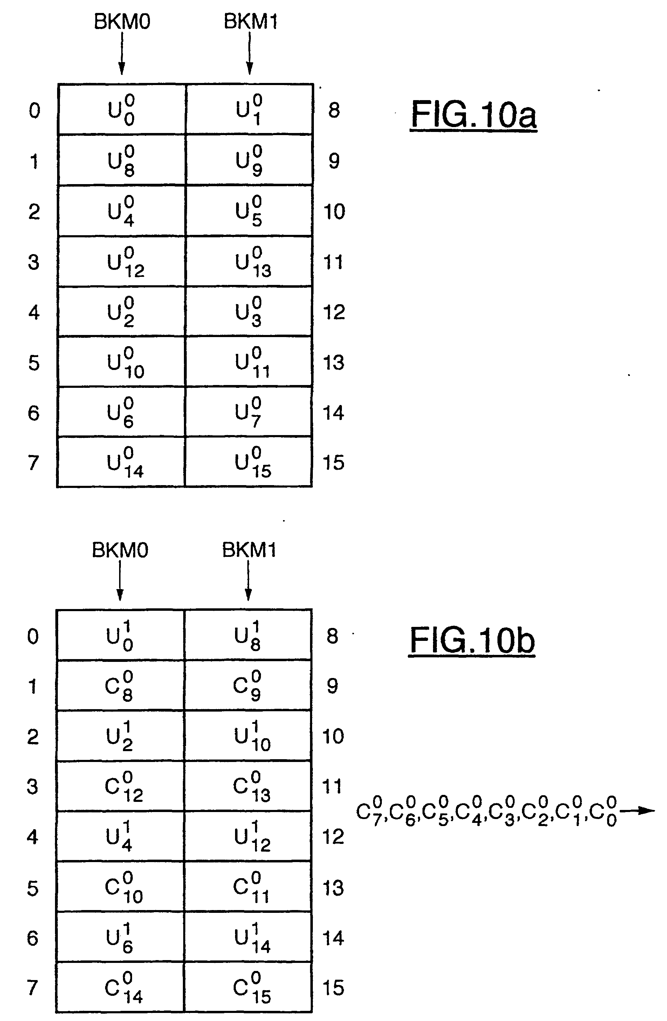

On a représenté à titre indicatif, sur les figures 10a à 10e, les phases de traitement ultérieur des symboles de rang 0 et de rang 1 (K = 0 et K = 1), en supposant que le nombre d'échantillons est égal à 16. Par ailleurs, à des fins de simplification, on a représenté à droite du banc mémoire BKM1 les adresses dans leur notation allant de 8 à 15 afin, dans un but de clarifier l'explication, de ne pas tenir compte des indexes des bancs mémoires.

Sur la figure 10a, les échantillons auxiliaires du symbole de rang 0, qui sont délivrés dans l'ordre renversé, k*, sont décrits dans les deux bancs mémoires aux adresses k (il s'agit donc là d'un adressage selon l'ordre naturel). Plus précisément, l'échantillon de rang 8 est stocké à l'adresse 1, tandis que l'échantillon de rang 13 est stocké à l'adresse 11 et l'échantillon de rang 5 est stocké à l'adresse 10.

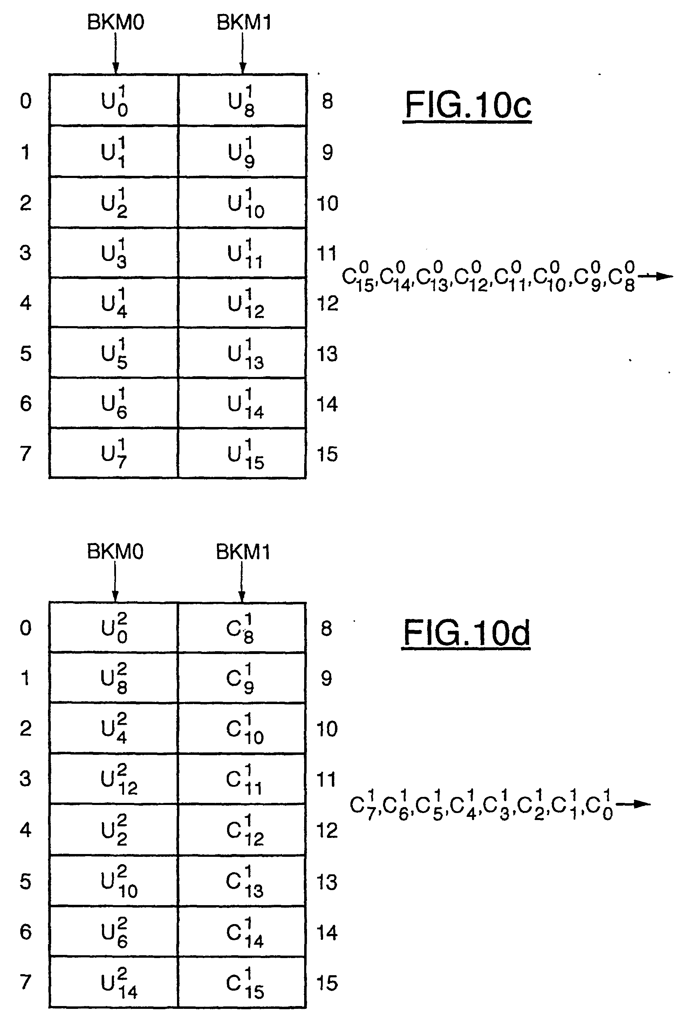

Les figures 10b et 10c illustrent la lecture et l'écriture des deux bancs mémoires (mémoires) au cours du cycle d'horloge symbole suivant.

Plus précisément, la figure 10b concerne les huit premiers cycles du signal SMCK, tandis que la figure 10c se rapporte au huit derniers cycles du signal SCK.

Sur les figures 10b et 10c, l'adressage des deux bancs mémoires s'effectue selon l'ordre renversé.

Plus précisément, au cours du premier cycle du signal SMCK, on extrait de la mémoire BKM0, l'échantillon $U_0^0$ situé à l'adresse 0, ainsi que l'échantillon $U_{15}^0$ situé à l'adresse 15. On élabore simultanément les échantillons $C_0^0$ et $C_{15}^0$. On délivre en sortie l'échantillon $C_0^0$ et on stocke dans la mémoire BKM1 l'échantillon $C_{15}^0$ à l'adresse 15. Parallèlement, l'échantillon $U_0^1$ est stocké à l'adresse 0 qui a été libérée en raison de l'extraction de l'échantillon $U_0^0$

pour l'élaboration de l'échantillon $C_0^0$.

Au cycle d'horloge suivant du signal SMCK, on extrait l'échantillon $U_1^0$ situé à l'adresse 8 et l'échantillon $U_{14}^0$ situé à l'adresse 7. On élabore simultanément l'échantillon $C_1^0$ et l'échantillon $C_{14}^0$. On délivre en sortie l'échantillon $C_1^0$ et on écrit dans la mémoire BKM0 à l'adresse 7 l'échantillon $C_{14}^0$.

Ainsi, au bout des huit premiers cycles du signal d'horloge SMCK, on obtient la configuration illustrée sur la figure 10b, les échantillons $C_0^0$-$C_7^0$ ayant été successivement délivrés dans l'ordre naturel en sortie.

Au cours des huit cycles suivants du signal SMCK (figure 10c), les échantillons $C_8^0$-$C_{15}^0$ sont successivement extraits des mémoires BKM0 et BKM1 dans l'ordre naturel pour être successivement et respectivement remplacés par les échantillons $U_1^1$, $U_9^1$, $U_5^1$, $U_{13}^1$, $U_3^1$, $U_{11}^1$, $U_7^1$ et $U_{15}^1$.

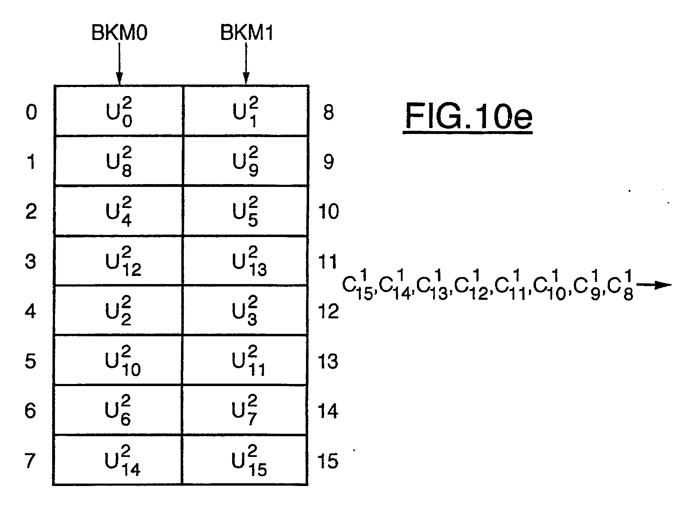

Le contenu des deux bancs mémoires au cours du cycle d'horloge symbole suivant est représenté sur les figures 10d et 10e, la figure 10d étant représentative des huit premiers cycles du signal d'horloge SMCK, tandis que la figure 10e est représentative des huit cycles suivants.

L'adressage des deux bancs mémoires s'effectue ici à nouveau selon l'ordre naturel. Le fonctionnement qui vient d'être décrit en référence aux figures 10b et 10c s'applique donc pour ces figures 10d et 10e avec l'adressage dans l'ordre naturel.

Ainsi, au cours des huit premiers cycles du signal SMCK, on a successivement délivré dans l'ordre naturel les huit premiers échantillons de sortie du symbole de rang 1 (figure 10d), tandis qu'on a dans le même temps écrit dans la mémoire les huit premiers échantillons auxiliaires du symbole de rang 2 qui ont été délivrés dans l'ordre renversé.

Au cours des huit cycles suivant, on continue à délivrer dans l'ordre naturel les huit derniers échantillons de sortie du symbole de rang 1, tandis qu'on termine de remplir la mémoire avec les huit autres échantillons auxiliaires du symbole de rang 2.

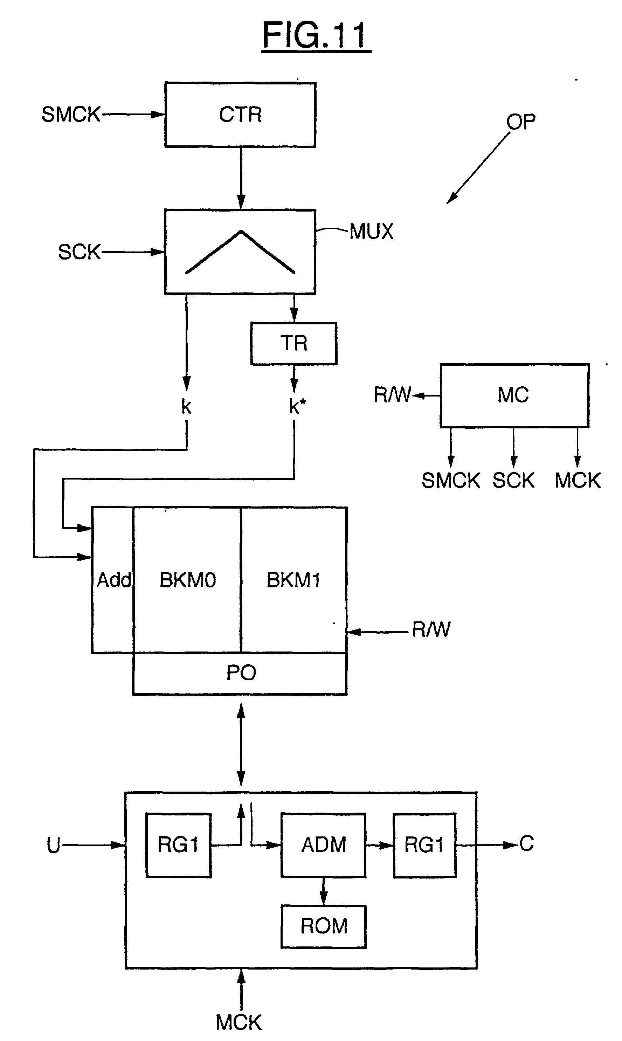

Matériellement, les différents éléments du bloc de traitement ultérieur BTU peuvent être réalisés par l'homme du métier, par exemple en utilisant des outils de synthèse automatique à partir des formules ci-avant, et de la description fonctionnelle de mise en oeuvre ci-avant. On obtient alors une réalisation matérielle sous forme de circuit intégré et/ou sous forme de circuits logiques reprogrammables. A titre indicatif, on a représenté sur la figure 11, très schématiquement, une architecture matérielle permettant une mise en oeuvre du procédé selon l'invention.

En ce qui concerne les moyens d'adressage des deux bancs mémoires ou mémoires BKM0 ET BKM1, ceux-ci peuvent comprendre un compteur CTR, comptant de 0 à N-1, au rythme du signal SMCK. La sortie de ce compteur CTR est directement l'adresse de stockage ou de lecture des deux bancs mémoires (dans le cas d'un adressage naturel). On suppose ici, à des fins de simplification, que les adresses du banc mémoire BKM0 varient de 0 à N/2-1, tandis que les adresses du banc mémoire varient de N/2 à N-1. Bien entendu, dans le cas où les adresses des deux bancs mémoires varient de 0 à (N-1)/2 avec deux indexes différents, il convient de prévoir alors des moyens de conversion modulo 2 de la sortie du compteur CTR et des moyens d'élaboration des indexes à base de multiplieurs et de diviseurs.

Add désigne le décodeur ligne ("row decoder") des deux bancs mémoires et PO désigne le pont d'entrée/sortie des échantillons.

Dans le cas d'un adressage renversé à k*, il est prévu des moyens de transformation TR permettant de passer de l'ordre naturel k à l'ordre renversé k*. En fait, ces moyens de transformation peuvent être tout simplement formés par câblage (inversion des "fils" correspondant aux bits du mot de sortie délivré par le compteur CTR et codant l'indice k).

Le passage de l'ordre naturel à l'ordre renversé est sélectionné par un multiplexeur MUX commandé par le signal d'horloge symbole SCK.

Le premier traitement, effectué par la partie opérative OP, qui consiste à stocker séquentiellement les échantillons auxiliaires dans les deux mémoires vives selon l'un des adressages naturel ou renversé, est alors simplement effectué par l'intermédiaire de registres, tel que le registre RG 1 stockant un à un les échantillons U reçus, et par des accès en écriture des mémoires, aux adresses délivrées par le compteur CTR.

La délivrance des différents échantillons à partir du registre RG1 est cadencée par le signal d'horloge de travail MCK délivré par un séquenceur de contrôle MC de structure classique. Ce séquenceur délivre également les autres signaux d'horloge SMCK et SCK, ainsi que le signal de commande d'écriture ou de lecture R/W de la mémoire.

Le deuxième traitement qui comporte la lecture selon l'ordre naturel ou renversé des N échantillons auxiliaires stockés, ainsi qu'une élaboration séquentielle des échantillons de sortie et leur délivrance séquentielle dans l'ordre naturel, est effectué, en ce qui concerne la lecture, également à partir des adresses délivrées par la sortie du compteur CTR et par le signal de commande de lecture délivré par le séquenceur de contrôle MC. L'élaboration des échantillons de sortie est effectuée par des moyens matériels ADM formés de multiplieurs et d'additionneurs en coopération avec une mémoire morte stockant les valeurs sinus et cosinus des coefficients complexes $e^{-j\pi k/N}$ (formule IX ci-avant). Là encore, ces moyens ADM, ainsi que le registre de sortie RG2, sont cadencés par le signal d'horloge MCK.

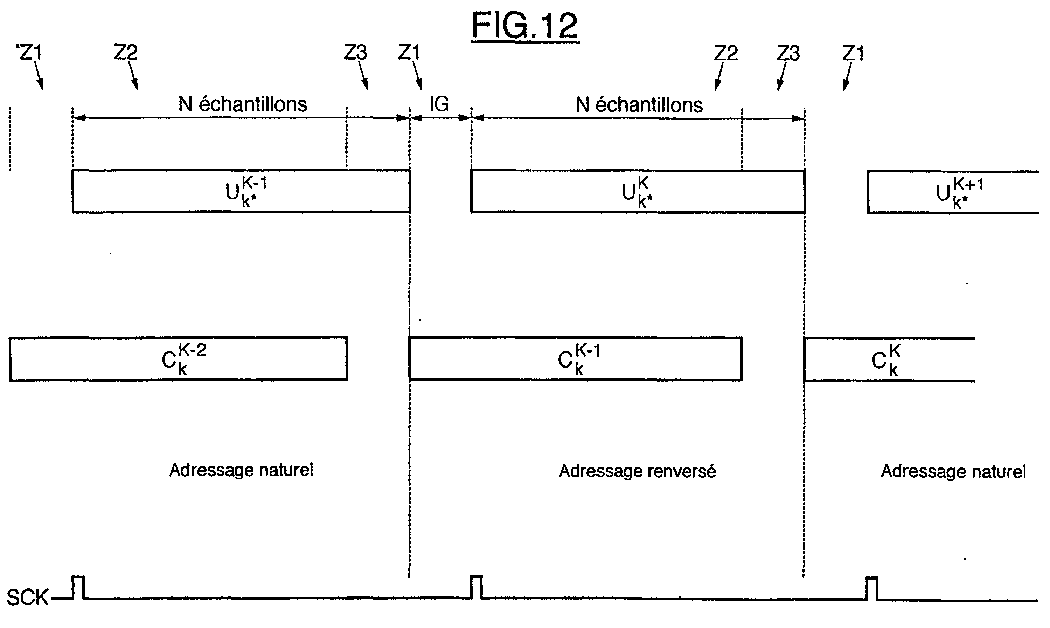

Afin d'optimiser notamment la vitesse de traitement, on peut utiliser le mode de mise en oeuvre illustré très schématiquement sur la figure 12.

Plus précisément, dans ce cas, on va utiliser la durée de l'intervalle de garde (zone Z1) pour commencer à élaborer les échantillons de sortie $C_k$ du symbole de rang K-1. Puis, après cet intervalle de garde (zone Z2), on va simultanément élaborer les échantillons $C_k$ du symbole de rang K-1 et stocker les échantillons auxiliaires du symbole de rang K. Puis, dans la zone Z3, on va terminer le stockage des échantillons de rang K.

L'homme du métier remarque alors que la phase de traitement ultérieur du symbole auxiliaire courant reste toujours temporellement imbriquée avec les phases de traitement ultérieur respectives du symbole auxiliaire précédent et du symbole auxiliaire suivant, l'adressage des deux mémoires étant toujours successivement et alternativement effectué selon l'ordre naturel ou renversé.

Mais, dans ce mode de mise en oeuvre, cette imbrication temporelle signifie qu'entre la fin de la délivrance du symbole auxiliaire précédent (rang K-1) et la fin de la délivrance du symbole auxiliaire courant ($U^K$), on effectue la première étape (stockage) de la phase de traitement ultérieur du symbole auxiliaire courant et la deuxième étape (élaboration et délivrance) de la phase de traitement ultérieur du symbole auxiliaire précédent (de rang K-1), en commençant (zone Z1) par la deuxième étape de la phase de traitement ultérieur du symbole auxiliaire précédent et en finissant par la première étape de la phase de traitement ultérieur du symbole auxiliaire courant (zone Z3).

Par ailleurs, entre la fin de la délivrance du symbole auxiliaire courant (rang K) et la fin de la délivrance du symbole auxiliaire suivant (rang K+1), on effectue la première étape de la phase de traitement ultérieur du symbole auxiliaire suivant et la deuxième étape de la phase de traitement ultérieur du symbole auxiliaire courant, en commençant (zone Z1) par la deuxième étape de la phase de traitement ultérieur du symbole auxiliaire courant et en finissant par la première étape de la phase de traitement ultérieur du symbole auxiliaire suivant (zone Z3).

En ce qui concerne la réalisation matérielle conforme à cette mise en oeuvre, l'homme du métier saura aisément l'ajuster en fonction de cette contrainte, en utilisant notamment au lieu d'un seul compteur CTR (figure 11) utilisable pour déterminer les adresses de lecture et d'écriture, deux compteurs distincts, l'un utilisable pour les adresses de lecture et l'autre pour les adresses d'écriture (pour tenir compte du décalage des indices dans la zone Z2).

Et, dans ce mode de mise en oeuvre, d'une façon générale, on cadencera ces compteurs de façon à écrire un échantillon toujours à une adresse d'écriture de rang inférieur à une adresse de lecture.

**Revendications**

1. Procédé de transformation d'un flot de groupes respectifs de 2N données réelles d'entrée en un flot de symboles complexes de sortie respectivement formés de N échantillons complexes de sortie, par un traitement du type entrelacé comprenant pour un groupe d'entrée courant, une phase de traitement initial comportant l'élaboration d'un symbole initial courant formé de N échantillons complexes initiaux courants ordonnés selon ($A^k$) un ordre naturel correspondant à l'ordre naturel (k) de réception des données d'entrée dudit groupe courant, et un calcul de transformée de Fourier directe de taille N délivrant dans un ordre (k*) dit renversé par rapport à l'ordre naturel, N échantillons complexes auxiliaires courant ($U_{k*}^K$) formant un symbole auxiliaire courant ($U^K$), et une phase de traitement ultérieur du symbole auxiliaire courant dans laquelle on élabore à partir des échantillons auxiliaires courants délivrés, les N échantillons complexes de sortie courants ($C_k^K$), ordonnés selon l'ordre naturel, et formant le symbole de sortie courant ($C^K$), **caractérisé par le fait que** la phase de traitement ultérieur du symbole auxiliaire courant comprend une première étape comportant le stockage séquentiel des N échantillons auxiliaires ($U_{k*}$) dans deux mémoires vives adressables séparément et de taille respective égale à N/2 (BKM0, BKM1) en utilisant une première séquence d'adressage correspondant à l'un des ordres naturel et renversé, puis une deuxième étape comportant l'élaboration séquentielle des N échantillons de sortie ($C_k$) et leur délivrance séquentielle dans l'ordre naturel (k) à partir d'une lecture de ces N échantillons auxiliaires stockés en utilisant une deuxième séquence d'adressage correspondant à l'autre des ordres naturel et renversé, et **par le fait que** la phase de traitement ultérieur du symbole auxiliaire courant ($U^K$) est temporellement imbriquée avec les phases de traitement ultérieur respectives du symbole auxiliaire précédent ($U^{K-1}$) et du symbole auxiliaire suivant ($U^{K+1}$), l'adressage des deux mémoires étant successivement et alternativement effectué selon la première et la deuxième séquence d'adressage.

2. Procédé selon la revendication 1, **caractérisé par le fait que** lors de la première étape de la phase de traitement ultérieur du symbole auxiliaire courant ($U^K$) on stocke chacun de deux échantillons auxiliaires appariés ($U_{k*}$, $U_{(N-k)*}$) dans une mémoire différente, et **par le fait que** dans la deuxième étape on élabore simultanément l'échantillon de sortie courant de rang k et l'échantillon de sortie courant apparié de rang N-k, on délivre directement l'échantillon de sortie courant de rang k et on stocke l'échantillon de sortie courant apparié dans l'une des mémoires en attendant de l'extraire de nouveau en vue de sa délivrance ultérieure.

**3.** Procédé selon la revendication 1 ou 2, **caractérisé par le fait qu'**entre la fin de la délivrance du symbole auxiliaire précédent ($U^{K-1}$) et la fin de la délivrance du symbole auxiliaire courant ($U^K$), on effectue la première étape de la phase de traitement ultérieur du symbole auxiliaire courant ($U^K$) et la deuxième étape de la phase de traitement ultérieur du symbole auxiliaire précédent ($U^{K-1}$), en commençant (Z1) par la deuxième étape de la phase de traitement ultérieur du symbole auxiliaire précédent et en finissant (Z3) par la première étape de la phase de traitement ultérieur du symbole auxiliaire courant, et **par le fait qu'**entre la fin de la délivrance du symbole auxiliaire courant ($U^K$) et la fin de la délivrance du symbole auxiliaire suivant ($U^{K-1}$). on effectue la première étape de la phase de traitement ultérieur du symbole auxiliaire suivant et la deuxième étape de la phase de traitement ultérieur du symbole auxiliaire courant, en commençant (Z1) par la deuxième étape de la phase de traitement ultérieur du symbole auxiliaire courant et en finissant (Z3) par la première étape de la phase de traitement ultérieur du symbole auxiliaire suivant.

**4.** Dispositif de transformation d'un flot de groupes respectifs de 2N données réelles d'entrée en un flot de symboles complexes de sortie respectivement formés de N échantillons complexes de sortie, comprenant des moyens de traitement aptes à effectuer sur chaque groupe d'entrée un traitement du type entrelacé, et comportant un bloc de traitement initial (BTI) comportant des moyens d'élaboration d'un symbole initial (A) formé de N échantillons complexes initiaux courants ordonnés selon un ordre naturel correspondant à l'ordre naturel de réception des données d'entrée dudit groupe d'entrée, et des moyens de calcul de transformée de Fourier directe de taille N (DF) délivrant dans un ordre dit renversé par rapport à l'ordre naturel, N échantillons complexes auxiliaires formant un symbole auxiliaire (U), et un bloc de traitement ultérieur (BTU) apte à élaborer à partir des échantillons auxiliaires délivrés ($U_{k^*}$), les N échantillons complexes de sortie ($C_k$), ordonnés selon l'ordre naturel, et formant le symbole de sortie (C) correspondant audit groupe d'entrée, **caractérisé par le fait que** le bloc de traitement ultérieur (BTU) comprend deux mémoires vives adressables séparément et de taille respective égale à N/2 (BKM0, BKM1), des premiers moyens de traitement (RG1, MC, CTR) aptes à efectuer un premier traitement comportant le stockage séquentiel des N échantillons auxiliaires dans les deux mémoires vives selon une première séquence d'adressage commandable correspondant à l'un des ordres naturel et renversé, des deuxièmes moyens de traitement (ADM, CTR) aptes à effectuer un deuxième traitement comportant la lecture des N échantillons auxiliaires stockés selon une deuxième séquence d'adressage commandable correspondant à l'autre des ordres naturel et renversé, l'élaboration séquentielle des N échantillons de sortie et leur délivrance séquentielle dans l'ordre naturel, et des moyens de contrôle (MC, MUX) aptes

à activer les premiers moyens de traitement puis les deuxièmes moyens de traitement de façon à effectuer successivement les premier et deuxième traitements relatifs à chaque symbole auxiliaire courant ($U^K$),
à activer parallèlement les premiers moyens de traitement et les deuxièmes moyens de traitement de façon à effectuer respectivement les premier et deuxième traitements relatifs à deux symboles auxiliaires successifs ($U^K$, $U^{K+1}$), et
à alternativement activer la première et la deuxième séquence d'adressage (k, k*) à chaque nouvelle activation des premiers moyens de traitement.

## Patentansprüche

**1.** Verfahren zur Umwandlung einer Folge von Gruppen von je 2N reellen Eingangsdaten in einer Folge von komplexen Ausgangssymbolen, die je aus N komplexen Ausgangstastproben bestehen, mit Hilfe einer Verarbeitung vom verschachtelten Typ, das für eine laufende Eingangsgruppe eine Phase der Anfangsverarbeitung mit der Erarbeitung eines laufenden Anfangssymbols aus N komplexen laufenden Anfangstastproben, die gemäß ($A^k$) geordnet sind, wobei eine natürliche Reihenfolge der natürlichen Reihenfolge (k) beim Empfang der Eingangsdaten der laufenden Gruppe entspricht, und mit einer Berechnung einer direkten Fouriertransformierten der Ordnung N, die in einer Reihenfolge (k*), die als bezüglich der natürlichen Reihenfolge umgekehrt bezeichnet wird, N komplexe laufende Hilfstastproben ($U_k^{*K}$) liefert, die ein laufendes Hilfssymbol ($U^k$) bilden, und eine Phase der späteren Verarbeitung des laufenden Hilfssymbols aufweist, in der ausgehend von den gelieferten laufenden Hilfstastproben die N laufenden komplexen Ausgangstastproben ($C_k^K$) erarbeitet werden, die in der natürlichen Reihenfolge angeordnet sind und das laufende Ausgangssymbol ($C^K$) bilden, **dadurch gekennzeichnet, dass** die Phase der späteren Verarbeitung des laufenden Hilfssymbols einen ersten Schritt, der das sequentielle Speichern der N Hilfstastproben ($U_k^*$) in zwei RAM-Speichern, die getrennt adressierbar sind und deren Größe N/2 entspricht (BKMO, BKM1), unter Verwendung einer ersten Adressen-Reihenfolge, die entweder der natürlichen oder der umgekehrten Reihenfolge entspricht, und dann einen zweiten Schritt aufweist, der die sequentielle Erarbeitung der N Ausgangstastproben ($C_k$) und ihre sequentielle Ausgabe in der natürlichen Reihenfolge (k) ausgehend von einem Lesen dieser N gespeicherten Hilfstastproben unter Verwendung einer zweiten Adressen-Reihenfolge enthält, die der anderen der natürlichen bzw. umgekehrten Reihenfolge entspricht, und dadurch, dass die Phase der späteren Verarbeitung des laufenden Hilfssymbols ($U^K$) zeitlich mit den Phasen der späteren Verarbeitung des vorhergehenden Hilfssymbols ($U^{K-1}$) und des folgenden Hilfssymbols ($U^{K+1}$) verschachtelt ist, wobei die Adressierung der beiden Speicher nacheinander und alternativ gemäß der ersten bzw. der zweiten Adressen-Reihenfolge erfolgt.

2. Verfahren nach Anspruch 1, **dadurch gekennzeichnet, dass** während des ersten Schritts der Phase der späteren Verarbeitung des laufenden Hilfssymbols ($U^K$) jede der beiden gepaarten Hilfstastproben ($U_{k*}$, $U_{(N-k)}{}^*$) in einem anderen Speicher gespeichert wird, und dass während des zweiten Schritts die laufende Ausgangstastprobe des Rangs k und die gepaarte laufende Ausgangstastprobe des Rangs N-k gleichzeitig erarbeitet werden, dass direkt die laufende Ausgangstastprobe des Rangs k geliefert wird und die gepaarte laufende Ausgangstastprobe in einem der Speicher gespeichert wird und dort auf ihr erneutes Extrahieren für ihre spätere Lieferung wartet.

3. Verfahren nach Anspruch 1 oder 2, **dadurch gekennzeichnet, dass** zwischen dem Ende des Lieferns des vorhergehenden Hilfssymbols ($U^{K-1}$) und dem Ende des Lieferns des laufenden Hilfssymbols ($U^K$) der erste Schritt der Phase der späteren Verarbeitung des laufenden Hilfssymbols ($U^K$) und der zweite Schritt der Phase der späteren Verarbeitung des vorhergehenden Hilfssymbols ($U^{K-1}$) durchgeführt werden, wobei (Z1) mit dem zweiten Schritt der Phase der späteren Verarbeitung des vorhergehenden Hilfssymbols begonnen und (23) mit dem ersten Schritt der Phase der späteren Verarbeitung des laufenden Hilfssymbols geendet wird, und dass zwischen dem Ende der Ausgabe des laufenden Hilfssymbols ($U^K$) und dem Ende der Ausgabe des folgenden Hilfssymbols ($U^{K+1}$) der erste Schritt der Phase der späteren Verarbeitung des folgenden Hilfssymbols und der zweite Schritt der Phase der späteren Verarbeitung des laufenden Hilfssymbols durchgeführt werden, indem (Z1) mit dem zweiten Schritt der Phase der späteren Verarbeitung des laufenden Hilfssymbols begonnen und (Z3) mit dem ersten Schritt der Phase der späteren Verarbeitung des folgenden Hilfssymbols geendet wird.

4. Vorrichtung zur Umwandlung einer Folge von Gruppen von je 2N reellen Eingangsdaten in eine Folge von komplexen Ausgangssymbolen, die je aus N komplexen Ausgangstastproben bestehen, wobei die Vorrichtung Verarbeitungsmittel aufweist, die in der Lage sind, in jeder Eingangsgruppe eine Verarbeitung vom verschachtelten Typ durchzuführen, und einen Anfangsverarbeitungsblock (BTI) mit Mitteln zur Erarbeitung eines Anfangssymbols (A), das aus N laufenden komplexen Anfangstastproben besteht, die gemäß einer natürlichen Reihenfolge angeordnet sind, die der natürlichen Reihenfolge des Empfangs der Eingangsdaten der Eingangsgruppe entspricht, und mit Mitteln zur Berechnung einer direkten Fouriertransformierten der Ordnung N (DF), die in einer bezüglich der natürlichen Reihenfolge "umgekehrten" Reihenfolge N komplexe Hilfstastproben liefert, die ein Hilfssymbol (U) bilden, und einen Block zur späteren Verarbeitung (BTU) aufweist, der ausgehend von den gelieferten laufenden Hilfstastproben ($U_k{}^*$) die N komplexen Ausgangstastproben ($C_k$) erarbeiten kann, die in der natürlichen Reihenfolge angeordnet sind und das Ausgangssymbol (C) entsprechend der Eingangsgruppe bilden, **dadurch gekennzeichnet, dass** der Block zur späteren Verarbeitung (BTU) zwei RAM-Speicher, die getrennt adressierbar sind und deren Größe je N/2 entspricht (BKMO, BKM1), erste Verarbeitungsmittel (RG1, MC, CTR), die in der Lage sind, eine erste Verarbeitung durchzuführen, die die sequentielle Speicherung der N Hilfstastproben in den beiden RAM-Speichern gemäß einer ersten steuerbaren Adressen-Reihenfolge enthält, die entweder der natürlichen oder der umgekehrten Reihenfolge entspricht, zweite Verarbeitungsmittel (ADM, CTR), die in der Lage sind, eine zweite Verarbeitung durchzuführen, die das Lesen der N Hilfstastproben, die gemäß einer zweiten steuerbaren Adressen-Reihenfolge entsprechend der jeweils anderen der natürlichen und umgekehrten Reihenfolge gespeichert sind, die sequentielle Erarbeitung der N Ausgangstastproben und ihre sequentielle Lieferung in der natürlichen Ordnung enthält, und Steuermittel (MC, MUX) aufweist, die in der Lage sind,

- die ersten Verarbeitungsmittel und dann die zweiten Verarbeitungsmittel zu aktivieren, um nacheinander die erste bzw. die zweite Verarbeitung bezüglich jedes laufenden Hilfssymbols ($U^K$) durchzuführen,
- parallel die ersten Verarbeitungsmittel und die zweiten Verarbeitungsmittel zu aktivieren, um die erste bzw. die zweite Verarbeitung bezüglich zweier aufeinander folgender Hilfssymbole ($U^K$, $U^{K+1}$) durchzuführen, und
- abwechselnd die erste bzw. die zweite Adressen-Reihenfolge (k, k*) bei jeder neuen Aktivierung der ersten Verarbeitungsmittel zu aktivieren.

## Claims

1. Process for transforming a stream of respective groups of 2N real input data into a stream of complex output symbols respectively formed of N complex output samples, by a processing of the interleaved type comprising, for a current input group, a phase of initial processing comprising the formulating of a current initial symbol formed of N current initial complex samples ordered according to ($A^k$) a natural order corresponding to the natural order (k) of reception of the input data of the said current group, and a direct Fourier transform calculation of size N delivering in an order (k*) said to be reverse with respect to the natural order, N current auxiliary complex samples ($U_{k*}{}^K$) forming a current auxiliary symbol ($U^k$), and a phase of subsequent processing of the current auxiliary symbol in which the N current complex output samples ($C_k{}^K$) ordered according to the natural order, and forming the current output symbol ($C^K$) are formulated on the basis of the current auxiliary samples delivered, **characterized in that** the phase of subsequent processing of the current auxiliary symbol comprises a first step comprising the sequential storage of the N auxiliary samples ($U_{k*}$) in two separately addressable random access memories of respective size equal to N/2 (BKMO, BKM1) by using a first addressing sequence corresponding to one of the orders, natural and reverse, then a second step comprising the sequential formulation of the N output samples ($C_k$) and their sequential delivery in the natural order (k) on the basis of a reading of these N stored auxiliary samples by using a second addressing sequence corresponding to the other of the orders, natural and reverse, and **in that** the phase of subsequent processing of the current auxiliary symbol ($U^K$) is temporally nested with the respective phases of subsequent processing of the preceding auxiliary symbol ($U^{K-1}$) and of the next auxiliary symbol ($U^{K+1}$), the addressing of the two memories being performed successively and alternately according to the first and the second addressing sequence.

2. Process according to Claim 1, **characterized in that** during the first step of the phase of subsequent processing of the current auxiliary symbol ($U^K$), each of two paired auxiliary samples ($U_k{}^*$, $U_{(N-k)}{}^*$) is stored in a different memory, and **in that** in the second step, the current output sample of rank k and the paired current output sample of rank N-k are formulated simultaneously, the current output sample of rank k is delivered directly and the paired current output sample is stored in one of the memories while awaiting its re-extraction with a view to its subsequent delivery.

3. Process according to Claim 1 or 2, **characterized in that** between the end of the delivery of the preceding auxiliary symbol ($U^{K-1}$) and the end of the delivery of the current auxiliary symbol ($U^K$), the first step of the phase of subsequent processing of the current auxiliary symbol ($U^K$) and the second step of the phase of subsequent processing of the preceding auxiliary symbol ($U^{K-1}$) are performed, beginning (Z1) with the second step of the phase of subsequent processing of the preceding auxiliary symbol and ending (Z3) with the first step of the phase of subsequent processing of the current auxiliary symbol, and **in that** between the end of the delivery of the current auxiliary symbol ($U^K$) and the end of the delivery of the next auxiliary symbol ($U^{K-1}$), the first step of the phase of subsequent processing of the next auxiliary symbol and the second step of the phase of subsequent processing of the current auxiliary symbol are performed, beginning (Z1) with the second step of the phase of subsequent processing of the current auxiliary symbol and ending (23) with the first step of the phase of subsequent processing of the next auxiliary symbol.

4. Device for transforming a stream of respective groups of 2N real input data into a stream of complex output symbols respectively formed of N complex output samples, comprising processing means able to perform on each input group a processing of the interleaved type, and comprising an initial processing block (BTI) comprising means for formulating an initial symbol (A) formed of N current initial complex samples ordered according to a natural order corresponding to the natural order of reception of the input data of the said input group, and means of direct Fourier transform calculation of size N (DF), delivering in a so-called reverse order with respect to the natural order, N auxiliary complex samples forming an auxiliary symbol (U), and a subsequent processing block (BTU) able to formulate on the basis of the auxiliary samples delivered ($U_{k*}$), the N complex output samples ($C_k$), ordered according to the natural order, and forming the output symbol (C) corresponding to the said input group, **characterized in that** the subsequent processing block (BTU) comprises two separately addressable random access memories of respective size equal to N/2 (BKMO, BKM1), first processing means (RG1, MC, CTR) able to perform a first processing comprising the sequential storage of the N auxiliary samples in the two random access memories according to a first controllable addressing sequence corresponding to one of the orders, natural and reverse, second processing means (ADM, CTR) able to perform a second processing comprising the reading of the N stored auxiliary samples according to a second controllable addressing sequence corresponding to the other of the orders, natural and reverse, the sequential formulation of the N output samples and their sequential delivery in the natural order, and control means (MC, MUX) able

to activate the first processing means then the second processing means so as to perform successively the first and second processings relating to each current auxiliary symbol ($U^K$),

to activate in parallel the first processing means and the second processing means so as to perform respectively the first and second processings relating to two successive auxiliary symbols ($U^K$, $U^{K+1}$), and

to alternately activate the first and the second addressing sequence (k, k*) with each new activation of the first processing means.

## FIG.1

MDM1 ——— LT ——— MDM2

## FIG.2

MDM1

TBA → MAP → ETF → IN → LT

$C_k$
$k=0$ à $N-1$

$x_p$
$p=0$ à $2N-1$

## FIG.3

MDM2

BTI

LT → IN → DF → BTU → BTF

$A_k$
$k=0$ à $N-1$

$x_p$
$p=0$ à $2N-1$

$U_{k^*}$
$k^*=0$ à $N-1$

$C_k$
$k=0$ à $N-1$

# FIG.4

## FIG.5

DF

$A_{15} \cdots\cdots A_1 A_0$ → | ET0 | $\xrightarrow{BB}$ | ET1 | → $U_{15} \cdots\cdots U_8 U_0$

# FIG.6

# FIG.7

| k | | k* | |
|---|---|---|---|
| 0 | 0000 | 0000 | 0 |
| 1 | 0001 | 1000 | 8 |
| 2 | 0010 | 0100 | 4 |
| 3 | 0011 | 1100 | 12 |
| 4 | 0100 | 0010 | 2 |
| 5 | 0101 | 1010 | 10 |
| 6 | 0110 | 0110 | 6 |
| 7 | 0111 | 1110 | 14 |
| 8 | 1000 | 0001 | 1 |
| 9 | 1001 | 1001 | 9 |
| 10 | 1010 | 0101 | 5 |
| 11 | 1011 | 1101 | 13 |
| 12 | 1100 | 0011 | 3 |
| 13 | 1101 | 1011 | 11 |
| 14 | 1110 | 0111 | 7 |
| 15 | 1111 | 1111 | 15 |

# FIG.8

## FIG.9

N échantillons | IG | N échantillons

$U_{k*}^{K-1}$

$U_{k*}^{K}$

$U_{k*}^{K+1}$

$C_k^{K-2}$

$C_k^{K-1}$

$C_k^{K}$

Adressage naturel

Adressage renversé

Adressage naturel

CYMk

SMCK

CY1

CY2

CY3

SCK

EP 1 061 704 B1

**BKM0**   **BKM1**

| 0 | $U_0^0$ | $U_1^0$ | 8 |
|---|---|---|---|
| 1 | $U_8^0$ | $U_9^0$ | 9 |
| 2 | $U_4^0$ | $U_5^0$ | 10 |
| 3 | $U_{12}^0$ | $U_{13}^0$ | 11 |
| 4 | $U_2^0$ | $U_3^0$ | 12 |
| 5 | $U_{10}^0$ | $U_{11}^0$ | 13 |
| 6 | $U_6^0$ | $U_7^0$ | 14 |
| 7 | $U_{14}^0$ | $U_{15}^0$ | 15 |

## FIG.10a

**BKM0**   **BKM1**

| 0 | $U_0^1$ | $U_8^1$ | 8 |
|---|---|---|---|
| 1 | $C_8^0$ | $C_9^0$ | 9 |
| 2 | $U_2^1$ | $U_{10}^1$ | 10 |
| 3 | $C_{12}^0$ | $C_{13}^0$ | 11 |
| 4 | $U_4^1$ | $U_{12}^1$ | 12 |
| 5 | $C_{10}^0$ | $C_{11}^0$ | 13 |
| 6 | $U_6^1$ | $U_{14}^1$ | 14 |
| 7 | $C_{14}^0$ | $C_{15}^0$ | 15 |

## FIG.10b

$C_7^0, C_6^0, C_5^0, C_4^0, C_3^0, C_2^0, C_1^0, C_0^0 \rightarrow$

| | BKM0 | BKM1 | |
|---|---|---|---|
| 0 | $U_0^1$ | $U_8^1$ | 8 |
| 1 | $U_1^1$ | $U_9^1$ | 9 |
| 2 | $U_2^1$ | $U_{10}^1$ | 10 |
| 3 | $U_3^1$ | $U_{11}^1$ | 11 |
| 4 | $U_4^1$ | $U_{12}^1$ | 12 |
| 5 | $U_5^1$ | $U_{13}^1$ | 13 |
| 6 | $U_6^1$ | $U_{14}^1$ | 14 |
| 7 | $U_7^1$ | $U_{15}^1$ | 15 |

$C_{15}^0, C_{14}^0, C_{13}^0, C_{12}^0, C_{11}^0, C_{10}^0, C_9^0, C_8^0 \rightarrow$

## FIG.10c

| | BKM0 | BKM1 | |
|---|---|---|---|
| 0 | $U_0^2$ | $C_8^1$ | 8 |
| 1 | $U_8^2$ | $C_9^1$ | 9 |
| 2 | $U_4^2$ | $C_{10}^1$ | 10 |
| 3 | $U_{12}^2$ | $C_{11}^1$ | 11 |
| 4 | $U_2^2$ | $C_{12}^1$ | 12 |
| 5 | $U_{10}^2$ | $C_{13}^1$ | 13 |
| 6 | $U_6^2$ | $C_{14}^1$ | 14 |
| 7 | $U_{14}^2$ | $C_{15}^1$ | 15 |

$C_7^1, C_6^1, C_5^1, C_4^1, C_3^1, C_2^1, C_1^1, C_0^1 \rightarrow$

## FIG.10d

BKM0    BKM1

| | BKM0 | BKM1 | |
|---|---|---|---|
| 0 | $U_0^2$ | $U_1^2$ | 8 |
| 1 | $U_8^2$ | $U_9^2$ | 9 |
| 2 | $U_4^2$ | $U_5^2$ | 10 |
| 3 | $U_{12}^2$ | $U_{13}^2$ | 11 |
| 4 | $U_2^2$ | $U_3^2$ | 12 |
| 5 | $U_{10}^2$ | $U_{11}^2$ | 13 |
| 6 | $U_6^2$ | $U_7^2$ | 14 |
| 7 | $U_{14}^2$ | $U_{15}^2$ | 15 |

$C_{15}^1, C_{14}^1, C_{13}^1, C_{12}^1, C_{11}^1, C_{10}^1, C_9^1, C_8^1 \longrightarrow$

# FIG.10e

# FIG.11

# FIG.12

EP 1 061 704 B1

Z1   Z2                    Z3   Z1                          Z2    Z3    Z1

|← N échantillons →|  IG  |← N échantillons →|

$U_{k*}^{K-1}$          $U_{k*}^{K}$          $U_{k*}^{K+1}$

$C_k^{K-2}$          $C_k^{K-1}$          $C_k^{K}$

Adressage naturel          Adressage renversé          Adressage naturel

SCK